# EUROPÄISCHE PATENTSCHRIFT

(11) **EP 1 771 720 B1**
(45) Veröffentlichungstag und Bekanntmachung des Hinweises auf die Patenterteilung: **24.10.2012**
(21) Anmeldenummer: 05763252.3
(22) Anmeldetag: 06.07.2005
(51) Int. Cl.: G01N 21/39

(54) **SENSOR-VORRICHTUNG UND VERFAHREN ZUR ERMITTLUNG EINER PHYSIKALISCHEN GRÖSSE**
SENSOR DEVICE AND PROCESS FOR DETERMINING A PHYSICAL VALUE
SYSTEME DE DETECTION ET PROCEDE POUR DETERMINER UNE GRANDEUR PHYSIQUE

(30) Priorität: 30.07.2004 DE 102004037519
(43) Veröffentlichungstag der Anmeldung: 11.04.2007
(73) Patentinhaber: Universität Kassel, 34125 Kassel (DE)
(72) Erfinder: HILLMER, Hartmut, 34128 Kassel (DE)
(74) Vertreter: Dantz, Jan Henning
(86) Internationale Anmeldenummer: PCT/DE2005/001179
(87) Internationale Veröffentlichungsnummer: WO 2006/012825

(56) Entgegenhaltungen:
- DE-A1- 3 836 116
- US-A- 5 448 657
- US-A1- 2005 110 992
- LACOT E ET AL: "Spectrotemporal dynamics of a two-coupled mode laser" PHYSICAL REVIEW A, Bd. 57, Nr. 5, Mai 1998 (1998-05), Seiten 4019-4025, XP002350006
- BAEV V M AND TOSCHEK P E: "Sensitivity limits of laser intracavity spectroscopy" PROC. SPIE, Bd. 1715, 1992, Seiten 381-392, XP002350007
- MEISSNER K E ET AL: "Surface-Emitting Semiconductor Laser for Intracavity Spectroscopy and Microscopy" PROC. SPIE, Bd. 2399, 1995, Seiten 561-570, XP002350008
- WENG W W ET AL: "Design, Fabrication, and Performance of Infrared and Visible Vertical-Cavity Surface-Emitting Lasers" IEEE JOURNAL OF QUANTUM ELECTRONICS, Bd. 33, Nr. 10, 10. Oktober 1997 (1997-10-10), Seiten 1810-1824, XP002350009
- LONCAR M ET AL: "LOW-THRESHOLD PHOTONIC CRYSTAL LASER" APPLIED PHYSICS LETTERS, AIP, AMERICAN INSTITUTE OF PHYSICS, MELVILLE, NY, US, Bd. 81, Nr. 15, 7. Oktober 2002 (2002-10-07), Seiten 2680-2682, XP001142137 ISSN: 0003-6951
- BONDARENKO A N AND TROTSENKO V P: "Use of the mode competition effect in a helium-neon laser for measurement of small acoustic vibration amplitudes", IZMERITEL'NAYA TEKHNIKA (TRANSLATION), vol. 9, September 1974 (1974-09), page 80,

## Beschreibung

Die Erfindung betrifft eine Sensor-Vorrichtung der im Oberbegriff des Anspruchs 1 angegebenen Gattung und ein Verfahren nach dem Oberbegriff des Anspruchs 16.

Bei bekannten Vorrichtungen und Verfahren dieser Art wird als physikalische Größe z. B. die optische Absorption bzw. das Absorptionsvermögen einer chemischen Substanz, insbesondere eines Fluids ermittelt (z. B. DE 197 17 145 C2, DE 100 63 678 A1). Hierzu wird eine monomodig emittierende Laserdiode über einen vorgegebenen Wellenlängenbereich durchgestimmt, um dadurch wenigstens eine charakteristische Absorptionslinie im Spektrum eines zu detektierenden Fluids zu überstreichen. Die Abstimmung des Lasers erfolgt z. B. durch eine Variation seiner Arbeitstemperatur.

Ein Problem bei derartigen Sensor-Vorrichtungen stellt die geringe Wechselwirkungslänge des Lichts mit den zu detektierenden Fluidmolekülen dar. Es ist daher auch bereits bekannt, die effektive Wechselwirkungslänge der Sensor-Vorrichtungen durch Anwendung eines Mikroresonators in Form eines photonischen Kristalls zu vergrößern, was gleichzeitig dem Wunsch nach Miniaturisierung der Sensoren entgegenkommt. Dabei wird entweder von einer externen Lichtquelle, z.B. einem Laser emittiertes Licht durch den vorn Fluid durchströmten photonischen Kristall geleitet (z. B. DE 100 63 151 A1) oder der photonische Kristall zusammen mit einem laseraktiven Material derart zu einem Laser zusammengefaßt, daß das den Resonator durchströmende Gas unmittelbar die Lasereigenschaften bzw. das Emissionsverhalten des Lasers beeinflußt (z. B. DE 101 19 618 A1). Aus den Änderungen der Emissionseigenschaften kann auf die Art oder die Konzentration des Fluids geschlossen werden.

Die Nachweisempfindlichkeit derartiger Fluid-Sensoren wird allerdings als für praktische Anwendungen noch nicht ausreichend empfunden, insbesondere wenn sie zum qualitativen oder quantitativen Nachweis von besonders toxischen oder aus anderen Gründen besonders schädlichen Fluiden benutzt werden sollen.

Im Fall eines Fluid-Sensors bewirkt die optische Absorption als physikalische Größe eine Schwächung der Intensität des abgestrahlten Lichts und dadurch eine Änderung des Emissionsverhaltens des Lasers.

Aus dem Artikel "Use of the mode competition effect in a Helium - Neon Laser for Measurements of small acoustic vibration amplitudes" (Übersetzung), Izmeritel' naya Tekhnika, Nummer 9, Seite 80, September 1974, ist eine Sensor-Vorrichtung bekannt, bei der die Intensität zweier in einem Laser miteinander konkurrierender Moden miteinander verglichen wird. Zur Bestimmung der Intensität der konkurrierenden Moden wird ein Interferometer mit nachgeordneten Photomultipliem eingesetzt. Am Beispiel einer durch Schallwellen hervorgerufenen Längenänderung des Resonators des Lasers wird gezeigt, daß bereits eine geringfügige Änderung von äußeren physikalischen Größen eine merkliche Auswirkung auf die Intensitäten der konkurrierenden Moden hat, woraus sich eine hohe Empfindlichkeit der Sensor-Vorrichtung ergibt. Die vorgenommene optische Messung ist jedoch vergleichsweise aufwendig und nur bedingt miniaturisierbar.

Das technische Problem der vorliegenden Erfindung besteht daher darin, die Sensor-Vorrichtung und das Verfahren der eingangs bezeichneten Gattungen so zu gestalten, daß trotz miniaturisierter Bauweise zahlreiche unterschiedliche physikalische Größen und insbesondere deren Änderungen mit einer hohen Empfindlichkeit und Genauigkeit ermittelt werden können.

Zur Lösung dieses Problems dienen die kennzeichnenden Merkmale der Ansprüche 1 und 16.

Während bisher außer bei Direktanwendungen (z. B. Schweißen, Löten oder Bohren) stets angestrebt wurde, einen Laser einmodig zu betreiben und Nebenmoden zu unterdrücken (z. B. DE 38 36 116 A1), bezweckt die vorliegende Erfindung, den beim Betrieb.eines Lasers mit mehr als einer Mode auftretenden Modenwettbewerb auszunutzen. Dabei wird von dem Umstand Gebrauch gemacht, daß das vergleichsweise labile Modengleichgewicht eines mehrmodig betriebenen Lasers bereits durch geringfügige Änderungen zahlreicher Einflußgrößen wie z. B. Temperatur, Injektions-strom oder geometrische Resonatorbedingungen merklich gestört wird. Diese Einflußgrößen werden erfindungsgemäße entweder direkt als die zu ermittelnden physikalischen Größen verwendet oder indirekt zur Messung von abhängigen Größen wie z. B. Länge, Volumen, Brechzahl, elektrisches Feld, magnetisches Feld, Druck, optische Absorption oder dgl. verwendet. Im Prinzip eignet sich daher die erfindungsgemäße Sensor-Vorrichtung zur Ermittlung aller physikalischen Größen, die entweder direkt oder indirekt das Emissionsverhalten eines Lasers beeinflussen oder aus solchen, das Emissionsverhalten beeinflussenden Größen abgeleitet werden können.

Bei einem mehrmodigen Laserbetrieb juhrt bereits eine äußerst geringe, von einer physikalischen Größe herbeigeführte Beeinflussung der Laseremission zu einer wesentlich deutlicheren Änderung der Moden , als dies für eine einzige Mode beim einmodigen Betrieb beobachtet wird

Erfindungsgemäß werden die Intensitäten der wenigstens zwei konkurrierenden Moden durch eine Meßung des relativen Intensitätsrauschens (relativ intensity noise, RIN) ermittelt. Die Erfindung macht sich zu Nutze, daß durch die Laserratengleichungen die Dynamik der Ladungsträgerdichten (elektronisch) in der aktiven Zone des Lasers und die Photonendichten (photonisch) in den einzelnen Moden im Resonator eng korreliert sind, wodurch alle im Spektrum sichtbaren Elemente auch in elektronischen Größen wieder zu finden sind. Dadurch ist es möglich, die vergleichsweise teure optische Meßung durch die Meßung des relativen Intensitätsrauschens, also durch Meßung einer elektronischen Größe, zu ersetzen, was eine sehr kostengünstige Meßmöglichkeit implementiert.

Weitere vorteilhafte Merkmale der Erfindung ergeben sich aus den Unteransprüchen.

Die Erfindung wird nachfolgend in Verbindung mit den beiliegenden Zeichnungen an Ausführungsbeispielen näher erläutert. Es zeigen:
Fig. 1 eine schematische Darstellung einer ersten, zum Nachweis und zur Konzentrationsmessung einer chemischen Substanz bestimmten Sensor-Vorrichtung;
Fig. 2 eine schematische Darstellung der spektralen Abhängigkeit der Betriebs- bzw. Meßgrößen der Sensor-Vorrichtung nach Fig. 1;
Fig. 3 und 4 den Fig. 1 und 2 entsprechende Darstellungen für eine Sensor-Vorrichtung zur Messung einer Länge oder Längenänderung;
Fig. 5 schematisch Teile einer Sensor-Vorrichtung zur Messung eines Drucks oder einer Druckänderung;
Fig. 6 bis 10 weitere Sensor-Vorrichtungen zum Nachweis und zur Konzentrationsmessung einer chemischen Substanz;
Fig. 11 eine schematische Darstellung der spektralen Abhängigkeit der Betriebs bzw. Meßgrößen der Sensor-Vorrichtung nach Fig. 10; und
Fig. 12 bis 24 weitere Sensor-Vorrichtungen zum Nachweis und zur Konzentrationsmessung einer chemischen Substanz.

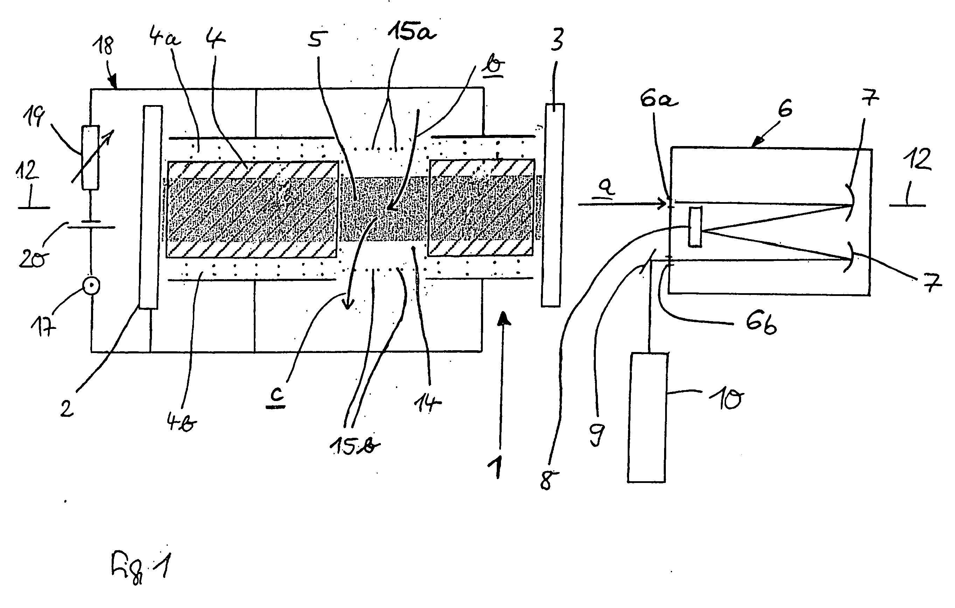

Fig. 1 zeigt eine Sensor-Vorrichtung zum Nachweis einer chemischen Substanz in Form eines Fluids durch Ermittlung der Absorption von Laserlicht.

Dabei wird die Tatsache ausgenutzt, daß Fluide an Hand ihrer charakteristischen Absorptionsbanden bzw. -linien identifiziert und auch quantitativ nachgewiesen werden können.

Die Sensor-Vorrichtung enthält einen in Fig. 1 schematisch dargestellten und vorzugsweise als Festkörperlaser ausgeführten Laser 1 mit einem horizontalen, durch zwei Resonatorspiegel 2 und 3 begrenzten Resonator. Zwischen den Resonatorspiegeln 2, 3 ist ein aktives Lasermedium 4 des Lasers 1 angeordnet, an dessen Breitseiten je eine Halbleiteischicht 4a, 4b vorgesehen ist. Die Reflektivität des Resonatorspiegels 3 ist kleiner als 100 %, so daß ein Teil des in dem aktiven Medium 4 optisch verstärkten und zwischen den Spiegeln 2 und 3 reflektierten Lichts 5 aus dem Resonatorspiegel 3 nach außen tritt. Das aus dem Resonatorspiegel 3 austretende, durch einen Pfeil a angedeutete Licht 5 wird z. B. in einen Eintrittsspalt 6a eines Monochromators 6 eingeleitet. Innerhalb des Monochromators 6 wird das Licht an Umlenkspiegeln 7 und an einem optischen Gitter 8 so reflektiert, daß es aus einem Austrittsspalt 6b des Monochromators 6 austritt. Das aus dem Monochromator 6 austretende Licht wird über ein Umlenkelement 9 einem Photodetektor 10 zugeführt.

Das aktive Lasermedium 4 ist senkrecht zu einer horizontalen Achse 12 des Lasers 1 von einem hohlkörperartigen Aufnahmeraum 14 für ein Fluid unterbrochen bzw. durchsetzt, das z. B. ein Gas, eine Flüssigkeit, eine Luft-Fluid-Mischung oder eine Mischung aus einem Trägergas und einem nachzuweisenden, möglicherweise gesundheitsschädlichen Fluid sein kann. Der Aufnahmeraum 14 weist an seinen parallel zur Achse 12 vorgesehenen Seiten jeweils Eintritts- bzw. Austrittsöffnungen 15a, 15b für das Fluid auf, während er an seinen senkrecht zur Achse 12 angeordneten Stirnseiten den Durchgang des Laserlichts 5 gestattet. Zur Identifizierung des Fluids wird dieses, wie durch die Pfeile b und c vereinfachend angedeutet ist, mittels der Öffnungen 15a, b durch den Aufnahmeraum 14 geleitet. Im Aufnahmeraum 14 wechselwirkt das Fluid mit dem im Laser 1 hin und her reflektierten Licht 5.

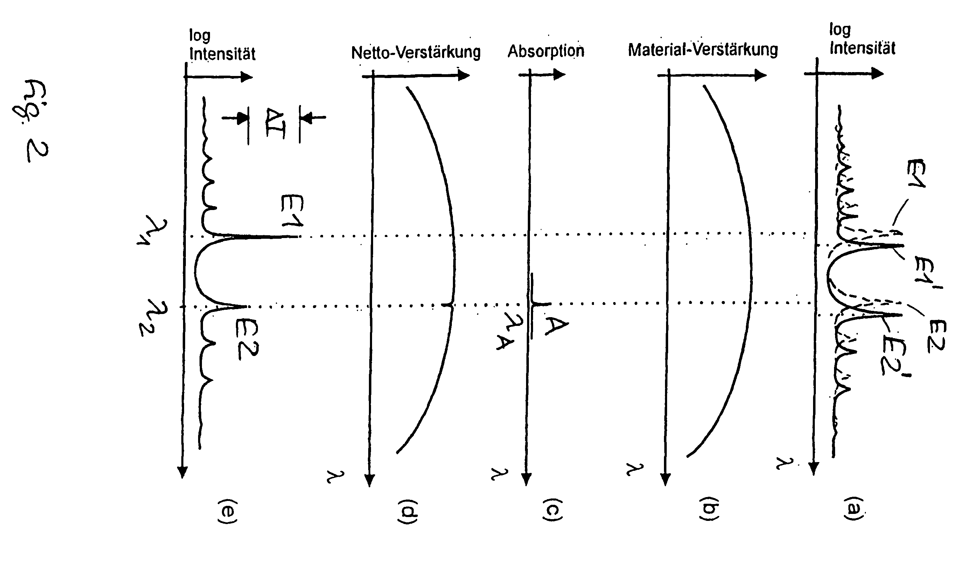

Wie in Fig. 2 schematisch angedeutet ist, wird ein Laser bzw. ein Laserdesign derart gewählt, daß die Lichtemission zweimodig erfolgt und der Laser 1 zwei Moden E1' und E2' gemäß Fig. 2(a) ausstrahlt. Dabei wird eine Mode so gewählt, daß sie spektral im Bereich einer bekannten und für das nachzuweisende Fluid charakteristischen Absorptionslinie bzw. eines entsprechenden Absorptionsbandes A bei einer Wellenlänge λ_{A} gemäß Fig. 2(c) liegt. Vorzugsweise werden die Betriebsparameter dabei so eingestellt, daß das in Fig. 2(a) gezeigte Modenspektrum zwei dominante, oberhalb der Laserschwelle liegende Moden E1', E2' und im übrigen deutlich schwächere Seitenmoden emittiert, wobei die Moden E1' E2' außerdem im Hinblick auf die optische Verstärkung im Wettbewerb stehen, d. h. konkurrierend sind. Ein solcher Betriebsmodus ist, wie eingangs erwähnt wurde, in der Regel unerwünscht, da der Laser 1 darin nicht stabil genug läuft und die Intensität selbst der stärksten Moden E1', E2' nach Fig. 2(a) meistens deutlich unter der in einem Einmoden-Emissionsmodus erreichbaren Intensität liegt.

Da die spektrale Lage einer Lasermode im Mehrmodenbetrieb sehr empfindlich von den jeweiligen Betriebsparametern abhängt, kann die absolute Modenwellenlänge nur schwer theoretisch vorherbestimmt werden. Im Normalfall wird daher keine der in Fig. 2 dargestellten Moden E1', E2' des Lasers 1 sofort spektral exakt mit der charakteristischen Absorptionslinie A des Fluids übereinstimmen. In der Regel kann jedoch wenigstens eine der Moden so bestimmt werden, daß sie spektral hinreichend nahe bei der Absorptionslinie A liegt. Der Laser 1 kann dann z. B. durch Veränderung eines elektrischen Injektionsstroms, der zur Erzeugung einer Besetzungsinversion in der Halbleiter-Laserstruktur dient, durch Änderung der Arbeitstemperatur mittels einer Wärmesenke (z. B. Heizelement oder Peltierelement) oder sonstwie so durchgestimmt werden, daß eine der beiden, vorzugsweise im wesentlichen gleichstarken Moden E1' und E2', deren Intensitätsunterschied vorzugsweise nur wenige dB beträgt, spektral mit der Absorptionsbande A des Fluids übereinstimmt. Dies ist in Fig. 2(a) für die nach E2 verschobene Mode E2' angedeutet, während die Mode E1' nach E1 verschoben wurde. Das dadurch erhaltene Emissionsspektrum mit den Hauptmoden E1, E2 und den zugehörigen Wellenlängen λ₁ und λ₂ ist in Fig. 2(a) durch eine gestrichelte Linie angedeutet. Dabei hat die Durchstimmbarkeit des Lasers 1 z. B. gleichzeitig mit Hilfe des Injektionsstroms und der Temperatur den Vorteil, daß auch die Intensitäten der nach der Abstimmung erhaltenen Moden E1, E2 etwa auf gleich große Werte eingestellt werden können, d. h. die Zweimodigkeit nicht bereits durch die Abstimmung des Lasers 1 beeinträchtigt wird.

Die Betriebsweise der beschriebenen Sensor-Vorrichtung ist im wesentlichen wie folgt:

Durch die optische Anregung der der Absorptionsbande A zugrundeliegenden Absorption des Fluids durch Laserlicht der Wellenlänge λ₂ = λ_{A} wird im Laserresonator das Licht der Wellenlänge λ₂ = λ_{A} bei jedem Durchgang durch das Fluid geschwächt. Dadurch wird die für den Laserprozeß durch stimulierte Emission erforderliche Lichtverstärkung für die Mode E2 reduziert [Fig. 2(d)], das heißt bei der Wellenlänge λ₂ = λ_{A} selektiv verringert. Bei der Wellenlänge λ₂ =λ_{A} entsteht in der Verstärkungscharakteristik eine Vertiefung (Dip). Die Einstellung der Besetzungsinversion im aktiven Lasermedium 4 wird davon nicht wesentlich beeinflußt. Die zur Erzeugung einer Besetzungsinversion in einen energetisch höheren Zustand gebrachten Elektronen stehen nach wie vor für einen Übergang in einen energetischen Grundzustand unter Aussendung eines Photons zur Verfügung. Da die stimulierte Emission die spontane Emission überwiegt, können die Elektronen im höheren Energiezustand durch eine Stimulation der nicht durch Absorptionsprozesse od. dgl. beeinflußten Mode E1 wesentlich effizienter zu einem Übergang in den Grundzustand unter Aussendung eines Photons der Wellenlänge λ₁ angeregt werden. Somit werden eine Erhöhung der Intensität der Mode E1 und eine Verringerung der Intensität der Mode E2 beobachtet [Fig. 2(e)]. Mit anderen Worten bewirkt die äußerst geringe Abnahme der effektiven Verstärkung [Fig. 2(d)] genau an der spektralen Lage der Absorptionslinie A (spektrales Lochbrennen) dramatisch einen entsprechenden Intensitätsunterschied der beiden Moden.

Noos dem Stand der Technik wird das Emissionssgektrum des Lasers 1 Hilfe des Monochromators 6 (Fig. 1) und des Photodetektors 10 aufgenommen. Dann wird z. B. die Differenz ΔI der spektroskopiseh bestimmten Intensitätsmaxima der beiden Moden E1 und E2 ermittelt. Aus dieser Differenz ΔI kann mit Hilfe einer zuvor für das Fluid durchgeführten Eichung auch die Fluid-Konzentration ermittelt werden. Eine derartige Eichung kann z. B. dadurch erfolgen, daß im Aufnahmeraum 14 bekannte Fluid-Konzentrationen erzeugt und dann die zugehörigen Differenzen ΔI der Intensitätsmaxima der beiden Moden E1 und E2 bestimmt werden. Zu diesem Zweck kann es zweckmäßig sein, die Ein- und Austrittsöffnungen 15a, 15b mit Abdeckungen zu verschließen, um während der Eichung jeweils exakt vorgegebene Fluidmengen im Aufnahmeraum 14 einzuschließen.

Wie aus Fig. 2(e) ersichtlich ist, wird nicht nur die Intensität der Emissionsmode E2 im Vergleich zu ihrer Intensität ohne Anwesenheit des Fluids verringert, sondern gleichzeitig auch die Intensität der Mode E1 bezüglich ihrer Intensität ohne Anwesenheit des Fluids verstärkt. Die resultierenden relativen Intensitätsänderungen ΔI der beiden Moden E1 und E2 führen zu einem starken Meßsignal. Da die beiden Moden E1 und E2 miteinander in einem Wettbewerb stehen, kann insbesondere die Intensitätsänderung der nicht direkt beeinflußten Mode E1 sehr viel größer als die Intensität der durch Absorption beeinflußten Mode E2 sein. Aus der logarithmischen Darstellung der Fig. 2(e) ist ersichtlich, daß hier Intensitätsänderungen bis zu Größenordnungen beobachtbar sind. Dadurch wird sowohl in qualitativer als auch in quantitativer Hinsicht eine hohe Empfindlichkeit und Genauigkeit erhalten.

Sofern die Menge des durch den Laser-Resonator geleiteten Fluids ausreicht, um die Brechzahl bzw. den Brechungsindex im Resonator und damit dessen optische Länge zu verändern, wird neben der Änderung der relativen Intensitäten der beiden Moden E1, E2 auch eine ungleich förmige spektrale Verschiebung der beiden Moden E1 und E2 erhalten, die analog zu Fig. 2(a) zur Änderung ihres ursprünglichen spektralen Abstands Δλ führen kann.

Die Erfindung beruht auf einem Laser, dessen Modenwettbewerb durch die zu detektierende physikalische Größe (Absorption des Fluids) sehr sensitiv beeinflußt . wird das Sensorsignal wobei aus dem relativen intensitätsrauschen N priblett wird.

Da durch die Laserratengleichungen die Dynamik der Ladungsträgerdichten (elektronisch) in der aktiven Zone des Lasers und die Photonendichten (photonisch) in den einzelnen Moden im Resonator eng korreliert sind, sind alle im Spektrum sichtbaren Elemente auch in elektrischen Größen wiederzufinden. Das ermöglicht es, die anhand der Fig. 1 erläuterte, vergleichsweise teure optische Messung durch die Messung einer elektronischen Größe zu ersetzen mämblich dem Intensitätsrauschen. Durch die Korrelation der Ladungsträger- und Photonendichten ist aus dem Rauschen, ebenfalls nach vorangegangener Eichung, dieselbe Information extrahierbar, d. h. es kann auch hier eine entsprechende Molekül-Konzentration "gemessen" werden, was eine sehr kostengünstige Meßmöglichkeit implementiert.

Die durch das Fluid erhaltenen Änderungen der beiden Moden werden hierbei z. B. durch Messung des relativen Intensitätsrauschens (relative intensity noise, RIN) ermittelt. Das relative Intensitätsrauschen beschreibt die Amplitudenfluktuation eines optischen Feldes und wird durch den Quotienten aus der mittleren quadratischen Intensitätsfluktuation der spektralen Dichte und der mittleren optischen Leistung angegeben. Erfindungsgemäß bewirkt die zu messende physikalische Größe im Spektrum eine Änderung der wenigstens zwei Moden. Mit einer derartigen Änderung ist auch eine Änderung des RIN-Signals verbunden. Je stärker das optische Signal der beiden Moden voneinander abweicht, um so geringer ist das RIN-Signal des Lasers. Es ist bekannt, daß sich das relative Intensitätsrauschen bei einem Übergang von einem mehrmodigen Betrieb eines Halbleiterlasers auf einen Einmoden-Betrieb verringert (z. B. DE 38 36116 A1). Sofern der Einfluß der physikalischen Größe dazu führt, daß das Signal einer der beiden Moden in etwa dem Untergrundsignal entspricht, d. h. ein Übergang in einen quasi-einmodigen Laserbetrieb stattgefunden hat, ist die Abnahme des RIN-Signals besonders deutlich und die Messung besonders einfach. Das RIN-Signal erhält man unter Verwendung eines Photodetektors und eines elektrischen Bandpaßfilters z. B. als Spannungssignal.

Der Injektionsstrom in eine maßgeschneiderte Laserstruktur kann außerdem so gewählt werden, daß eine Mode eines Lasers im Wettbewerb zwischen zwei Polarisationszuständen steht (z. B. zwischen TE und TM). In diesem Fall sind die Anteile in TE-und in TM-Polarisation nahezu gleich groß. In vielen Lasern unterscheiden sich diese beiden Anteile zudem noch spektral. Dies ist ein anderes Beispiel für einen Wettbewerb zwischen zwei spektralen Komponenten, die im Rahmen der vorliegenden Erfindung der Einfachheit halber durchweg als Moden bezeichnet sind. Folgende, nur beispielhaft angegebene Modenkombinationen des Lasers sind dabei denkbar: zwei longitudinale TE-Moden, zwei transversale TE-Moden, zwei TM-Moden, zwei transversale oder longitudinale TM-Moden oder je eine longitudinale TE-Mode und eine longitudinale TM-Mode.

Bei einem besonders kostengünstigen Ausführungsbeispiel der Sensor-Vorrichtung wird das bistabile Verhalten der beiden Moden dazu benutzt, um einen Schwellenwert (entspricht z. B. Modenentartung) bzw. eine sogenannte Konzentationssehwelle (z. B. Toxizitätsgrenzwert eines giftigen Moleküls) zu detektieren. Dabei wären die folgenden zwei Fälle denkbar: (a) das Fluid enthält die giftigen Moleküle in sehr geringer Konzentration unterhalb des Toxizitätsgrenzwertes und eine an die Sensor-Vorrichtung angeschlossene Alarmeinrichtung gibt kein Alarmsignal; (b) das Fluid enthält die giftigen Moleküle in höherer Konzentration oberhalb des Toxizitätsgrenzwertes und die Alarmemrichtung gibt ein Alarmsignal. Der Grenzwert läßt sich sehr präzise einstellen.

In Weiterbildung der anhand der Fig. 1 beschriebenen Sensor-Vorrichtung kann auch eine Vielzahl von Fluiden nebeneinander über die Ermittlung der physikalischen Größe "optische Absorption" nachgewiesen werden. Dazu wird der Laser 1 so betrieben, daß er mehr als zwei Moden, d. h. eine ganzzahlige Vielzahl "k" von Moden emittiert. In "k" verschiedenen Messungen kann jeweils eine Lasermode auf eine charakteristische Absorptionslinie eines der Vielzahl "k" von Fluiden abgestimmt werden. Ein Fluid wird dann jeweils durch die Steigerung der Intensität der spektral nicht mit der Absorptionsbande des Fluids übereinstimmenden Moden nachgewiesen. Alternativ ist es möglich, mit Ausnahme einer Referenzmode alle weiteren "k-1" Moden des k-modigen Lasers 1 gleichzeitig so durehzustimmen, daß sie spektral mit "k-1" unterschiedlichen Absorptionsbanden von bis zu "k-1" verschiedenen Fluiden übereinstimmen. Der Nachweis der vorhandenen Fluide wird dann über eine Abnahme der Intensitäten der "k-1" Moden bzw. ein Verschwinden der "k-1" Moden und eine gleichzeitige Inrensitatserhöhung der Referenzmode qualitativ möglich sein. Eine quantitative Bestimmung der Fluide könnte aus den Intensitätänderungen durch einen Vergleich mit gleichartig durchgeführten Vergleichsmessungen bei bekannten Fluidmengen erfolgen. So lassen sich mit einer Sensor-Vorrichtung eine Vielzahl von Fluiden nachweisen. Der Vorteil liegt hier in der großen Selektivität.

Die in Fig. 1 dargestellte Sensor-Vorrichtung kann alternativ auch als Strom-Sensor eingesetzt werden, wie in Fig. 1 grob schematisch angedeutet ist. Dazu wird z. B. ein zu messender Strom an einem Meßanschluß 17 eines stark vereinfacht dargestellten Injektionsstromkreises 18 eingespeist, der elektrische Versorgungs- und Steuerungselemente 19, 20 für den Laser 1 aufweist. An Hand einer zuvor durchgeführten Eichung des Modenspektrums des zweimodig betriebenen Lasers 1 kann der auf den Meßanschluß 17 gegebene Strom bzw. die Änderung des im Kreis 18 fließenden Stroms bestimmt werden. Diese Strommessung kann bei Verzicht auf eine Umsetzung des Meßsignals natürlich nur in einem Stromstärkebereich erfolgen, in dem auch der zum Betrieb des Halbleiterlasers erforderliche Injektionsstrom liegt. Ein Vorteil besteht jedoch darin, daß der Strom mit einer großen Genauigkeit von bis zu Zehnteln eines Nano-Ampère gemessen werden kann.

Die Strom-Messung basiert darauf, daß eine Veränderung des Injektionsstroms für den Laser 1 über eine Änderung der Ladungsträgerverteilung auch eine Änderung der Materialverstärkung des Lasermediums 4 hervorruft. Die Änderung der Materialverstärkung, insbesondere eine spektrale Änderung der Materialverstärkung hat eine gerichtete Änderung der beiden Moden zur Folge. Aus einem Vergleich der Signalstärken beider Moden kann die Stromstärke bei Zuhilfenahme einer Eichkurve auch quantitativ ermittelt werden. Im Gegensatz zum Nachweis eines Fluides ist hier der Meßstrom die physikalische Größe, die das Emissionsverhalten des Lasers 1 beeinflußt und dadurch meßbar wird.

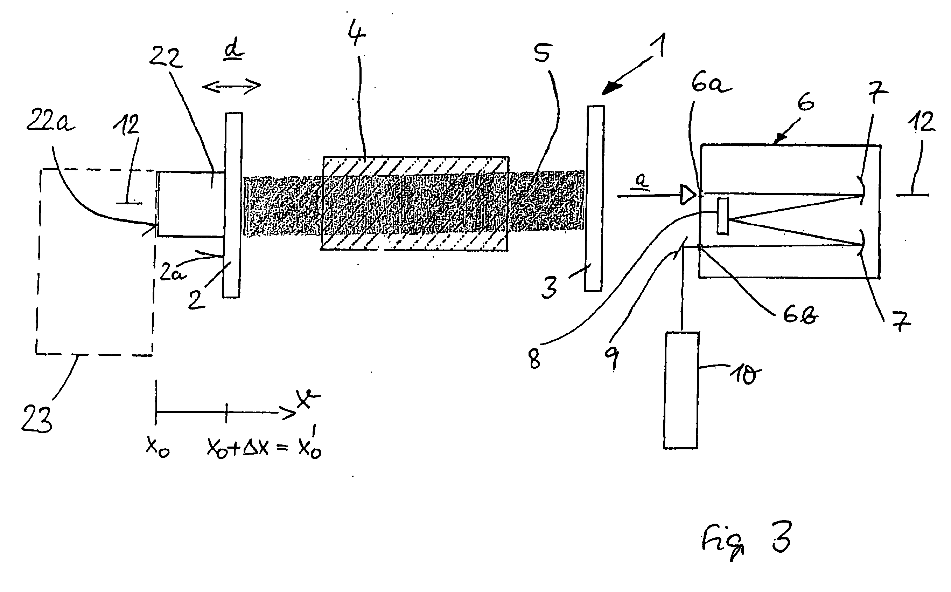

Fig. 3 zeigt eine Sensor-Vorrichtung, die der Sensor-Vorrichtung nach Fig. 1 weitgehend gleicht, weshalb für gleiche Teile dieselben Bezugszeichen verwendet sind. Im Gegensatz zu Fig. 1 ist die das Emissionsverhalten des Lasers 1 beeinflussende physikalische Größe hier die Länge, weshalb sich die Vorrichtung nach Fig. 3 insbesondere in zweifacher Hinsicht von der Vorrichtung nach Fig. 1 unterscheidet.

Ein erster Unterschied besteht darin, daß der Aufnahmeraum 14 für das Fluid fehlt. In Fig. 3 ist das aktive Lasermedium 4 daher ohne Unterbrechung, d. h. durchgehend dargestellt.

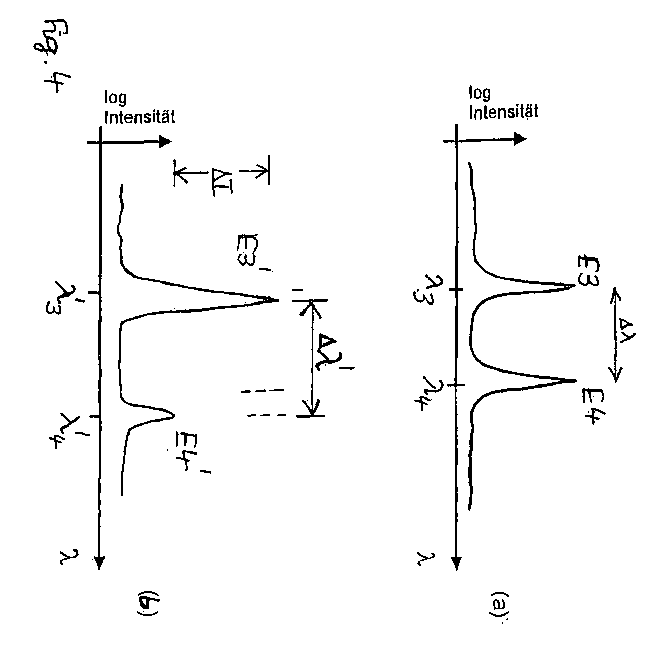

Ein weiterer wesentlicher Unterschied gegenüber der Fig. 1 besteht darin, daß die Sensor-Vorrichtung nach Fig. 3 zur Messung einer Länge dient. Zu diesem Zweck wird z. B. der Resonatorspiegel 3 unbeweglich, d. h. fest an einem stationären Bauteil befestigt, während der Resonatorspiegel 2 mit nicht näher dargestellten Mitteln in Richtung eines Doppelpfeils d verschiebbar gelagert wird. Dabei ist an einer Außenseite 2a des Resonatorspiegels 2 ein z. B. stabförmiges Meßelement 22 fest angebracht, das eine vom Resonatorspiegel 2 abgewandte Stimfläche 22a aufweist, die als Referenz zur Längen- bzw. Längenänderungsmessung benutzt und dazu an einer Start-position x₀ positioniert wird. Die Längenmessung erfolgt durch eine Betrachtung der Änderungen, die sich in der Laseremission aufgrund einer Verschiebung des Meßelements 22 und damit auch des Resonatorspiegels 2 in Richtung des Doppelpfeils d ergeben. Wie im Fall der Fig. 1 wird der Laser 1 dabei doppelmodig betrieben. Das emittierte Licht (Pfeil a) wird mittels des Gitters 8 spektral zerlegt und auf den Photodetektor 10 gelenkt, um seine spektrale Intensität aufzuzeichnen. Dabei wird die Anordnung so getroffen, daß sich im nicht verschobenen Zustand des Meßelements 22 ein Intensitäts/Wellenlängen-Spektrum gemäß Fig. 4 ergibt, das analog zu Fig. 2 zwei Hauptmoden E3 und E4 bei Wellenlängen λ₃ und λ₄ aufweist, die im wesentlichen mit derselben Intensität abgestrahlt werden.

Die Messung einer Länge setzt für die Zwecke der Erfindung eine entsprechende Verschiebung des Meßelements 22 bzw. des Resonatorspiegels 2 um eine Strecke Δx in Richtung der Achse 12 voraus, wie in Fig. 3 übertrieben groß dargestellt ist. Tatsächlich beträgt das Maß Δx z.B. nur einige Nanometer oder sogar Femto- oder Attometer. Wegen des unverschiebbar angeordneten Resonatorspiegels 3 hat das eine entsprechende Verkürzung der geometrischen Resonatorlänge um das Maß Δx zur Folge. Da der Laser 1 zweimodig betrieben wird, wobei beide Moden praktisch einen bistabilen Zustand einnehmen, führt bereits eine äußerst geringe Veränderung der Resonatorgeometrie zu einer deutlichen Änderung der Modenemission. Ein nach der Verkleinerung des Resonators um die Größe Δx aufgenommenes Intensitäts/Wellenlängen-Spektrum der Laseremission ist in Fig. 4(b) gezeigt. Die anfangs im wesentlichen mit gleicher Intensität ausgestrahlten Moden E3 und E4 sind durch die Längenänderung Δx des Resonators in zwei Moden E3', E4' überführt worden, deren Intensitätsmaxima bei Wellenlängen λ₃' und λ₄' liegen und deren absoluten spektralen Lagen jeweils verschoben sind, wobei sich ihr spektraler Abstand Δλ' im Vergleich zum Abstand Δλ der Intensitätsmaxima der Ausgangsmoden E3 und E4 verändert haben kann. Insbesondere ist, wie Fig. 4(b) zeigt, eine deutliche Änderung der Intensitätsverläufe der beiden Moden E3, E4 bzw. E3', E4' zu beobachten, weshalb die gemessene Größe ΔI auch hier eine empfindliche Anzeige der Länge bzw. Längenänderung ermöglicht.

Ob sich im Einzelfall das Maß ΔI besser als das Maß Δλ' zur Längenmessung eignet, muß anhand des Einzelfalls beurteilt werden. Zur Messung der absoluten Länge wäre es außerdem sinnvoll, eine Eichkurve aufzunehmen, indem die Maße ΔI und Δλ bekannten, mit anderen Mitteln (z. B. einem Laserinterferometer) gemessenen Änderungen der Resonatorlänge zugeordnet werden.

Alternativ kann die Sensor-Vorrichtung nach Fig. 3 auch als Sensor zur Ermittlung der Temperatur als physikalische Größe eingesetzt werden. Dabei wird ein Gegenstand, dessen Temperatur bestimmt werden soll, z. B. in thermischen Kontakt mit einem gut wärmeleitenden, unverschiebbar angeordneten Körper 23 gebracht, der in Fig. 3 gestrichelt angedeutet und fest mit der Stirnfläche 22a des Meßelements 22 verbunden ist. Eine dadurch verursachte thermische Ausdehnung oder Kontraktion des Meßelements 22 führt zu einer Verschiebung des Resonatorspiegels 2, sofern mit nicht dargestellten Mitteln dafür gesorgt ist, daß sich der Körper 23 selbst dabei nur in Richtung des Resonatorspiegels 3 ausdehnen kann. Eine Verschiebung des Resonatorspiegels 2 unter dem Einfluß von Temperaturänderungen führt analog zur Längenmessung zu einer Veränderung der Modeneigenschaften, so daß deren Messung als Maß für die Temperatur verwendet werden kann.

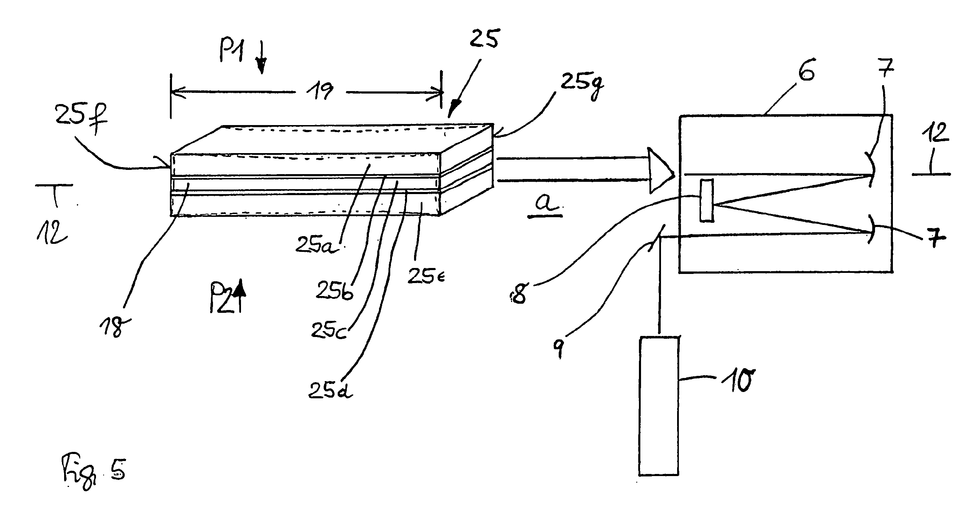

Als weitere physikalische Größe kann der Druck dienen. Hierzu kann z. B. ein schematisch in Fig. 5 dargestellter Laser 25 verwendet werden, der als Doppel-Heterostruktur-Diodenlaser ausgebildet ist. Im übrigen entspricht die Vorrichtung weitgehend der Vorrichtung nach Fig. 1 und 3, weshalb gleiche Teile wiederum mit denselben Bezugszeichen versehen und nur die zum Verständnis der Erfindung notwendigen Teile des Lasers 25 dargestellt sind. Der Laser 25 ist als ein aus unterschiedlichen Halbleiterschichten 25a bis 25e zusammengesetzter Schichtkörper aufgebaut, wobei eine mittlere Schicht 25c laseraktiv ist und zwei Stirnflächen des Schichtkörpers kristallografisch gespalten, optisch mit Multischichten vergütet oder optisch poliert und dadurch als Resonatorspiegel 25f, 25g ausgebildet sind. Durch geeignete Dimensionierung der Schichtenstruktur und der Kontaktgeometrie des Lasers 25 sowie durch einen geeigneten Injektionsstrom zur Erzeugung einer Besetzungsinversion wird dafür gesorgt, daß der Laser 25 erfindungsgemäß wenigstens zwei optische Moden emittiert. Diese werden so aus dem Laser 25 ausgekoppelt (Pfeil a) und untersucht, wie oben anhand der Fig. 1 und 3 ausführlich erläutert wurde.

Wird auf die Breitseiten des Lasers 25 bzw. seine dünne, membranartige Struktur ein Druck in Richtung von Pfeilen p1, p2 ausgeübt, dann verformt sich der Laser 25 längs grob schematisch und gestrichelt angedeuteter Verformungslinien. Diese Veränderung der Lasergeometrie beeinflußt die Laseremission analog zu Fig. 2 und 4, so daß hier aus einem Vergleich der Änderungen der wenigstens zwei Moden qualitativ bzw. nach Eichung auch quantitativ auf den Druck als physikalische Größe geschlossen werden kann. Alternativ wäre es bei entsprechender Ausbildung des Lasers 25 auch denkbar, in Richtung der Achse 12 einwirkende Drücke in eine Änderung des Abstandes der Resonatorspiegel 25f, 25g umzuwandeln, indem diese z. B. als dünne, verbiegbare, am Rand eingespannte Membranen ausgebildet werden, und den Druck somit analog zur Temperatur in Fig. 3 indirekt über eine entsprechende Längenänderung zu ermitteln.

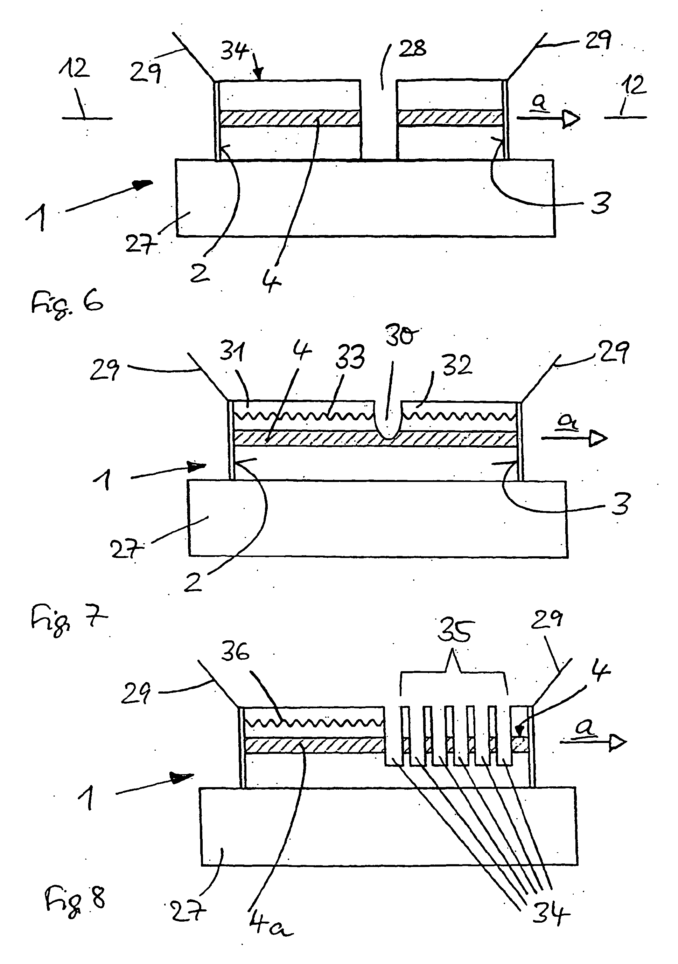

Nachfolgend werden anhand der Fig. 6 bis 24 weitere Ausführungsbeispiele der erfindungsgemäßen Sensor-Vorrichtung beschrieben. Da sich diese Ausführungsbeispiele von den Ausführungsbeispielen nach Fig. 1 bis 5 im wesentlichen nur durch Einzelheiten des Lasers bzw. der Struktur eines zwischen zwei Resonatorspiegeln angeordneten Laserbanelements, aber nicht durch ihren zwei- oder mehrmodigen Betrieb unterscheiden, werden nachfolgend nur die unterschiedlichen Bestandteile des Lasers näher erläutert. Im übrigen wird die Beschreibung zur Vermeidung von Wiederholungen auf den Fall des Nachweises eines Fluids anhand der spektralen Absorption als physikalische Größe beschränkt.

Fig. 6 bis 9 zeigen an sich bekannte Laserbauelemente mit horizontalen Resonatoren (z. B. "A micromachined in-plane tunable optical filter using a thermo-optic effect of crystalline silicon" von S. S. Yun and J. H. Lee" in J. Micromechanics and microengineering, 13, 1-5 (2003).

Nach Fig. 6 ist dem Laser 1 zusätzlich eine Wärmesenke 27 in Form eines Peltierelements zugeordnet, auf dem das Laserbauelement mit seinen Resonatorspiegeln 2, 3 montiert ist, die hier z. B. aus aufgedampften Vergütungsschichten bestehen. Das aktive Lasermedium 4 ist erfindungsgemäß und analog zu Fig. 1 entlang der horizontalen Achse 12 unter Bildung eines Fluid-Aufnahmeraums 28 unterbrochen, der nach unten hin bis zur Wärmesenke 27 reicht. Außerdem weist der Laser 1 trichterartig angeordnete bzw. ausgebildete Leitelemente 29 auf, die das Fluid in Richtung des Aufnahmeraums 28 lenken und insbesondere bei einem Fluid in Form einer Flüssigkeit zweckmäßig sind.

Fig. 7 zeigt analog zu Fig. 6 eine Sensor-Vorrichtung, bei der ein nutartig ausgeführter Aufnahmeraum 30 für das Fluid das aktive Lasermedium 4 nur teilweise durchsetzt. Oberhalb des laseraktiven Mediums 4, d.h. auf der von der Wärmesenke 27 abgewandten Seite ist der Aufnahmeraum 30 seitlich von zwei Schichten 31, 32 begrenzt, in denen jeweils eine der räumlich verteilten Rückkopplung (distributed feedback, DFB) dienende, räumlich periodische Struktur in Form eines sog. DFB-Gitters 33 ausgebildet ist.

Die in Fig. 6 und 7 gezeigten Laser 1 können erfindungsgemäß auch Bestandteil einer zur Temperaturmessung vorgesehenen Sensor-Vorrichtung sein. Soll etwa die Temperatur eines Untersuchungsgegenstands (nicht gezeigt) bestimmt werden, wird z. B. die Wärmesenke 27 in einen guten thermischen Kontakt mit dem Untersuchungsgegenstand gebracht. Je nach der vom Untersuchungsgegenstand auf die Wärmesenke 27 übertragenen Wärme wird eine geringfügige Veränderung des Abstands der Resonatorspiegel 2, 3 erreicht, was analog zur obigen Beschreibung zu einer Änderung des Emissionsspektrums des Lasers 1 führt.

Bei der in Fig. 8 dargestellten Ausführungsform des Lasers 1 ist eine Vielzahl von Hohlräumen 34 vorgesehen, die zusammen einen Aufnahmeraum für ein Fluid bilden. Dadurch wird das aktive Medium 4 des Lasers 1 mehrfach unterbrochen. Beim Ausführungsbeispiel nach Fig. 8 bilden außerdem zwischen den Hohlräumen 34 vorhandene Abschnitte ein DFB-Gitter 35, welches einen hohen Brechungsindexkontrast und damit einen großen Kopplungskoeffizienten aufweist. Über einen nicht unterbrochenen Abschnitt 4a des aktiven Lasermediums 4 ist ein DFB-Gitter 36 mit einem geringen Kopplungskoeffizienten vorgesehen.

Wie ein Vergleich der Fig. 6 bis 8 zeigt, können die jeweiligen Aufnahmeräume 28, 30 und 34 im Prinzip beliebig gestaltet und im Lichtweg angeordnet sein. Außerdem kann das DFB-Gitter 35 ganz fehlen (Fig. 6) oder wahlweise nur auf einer Seite oder auf beiden Seiten des Aufnahmeraums 30 (Fig. 7) angeordnet sein.

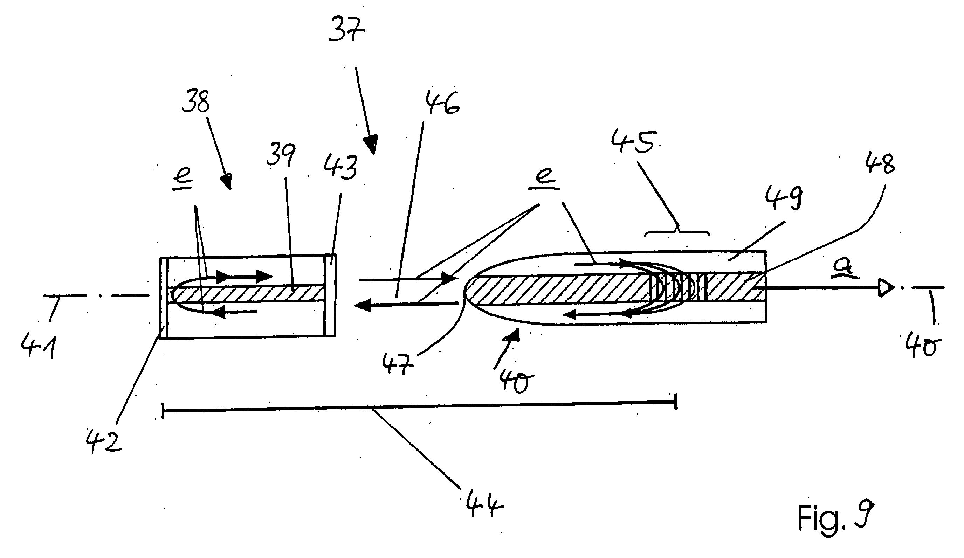

Ein in einer erfindungsgemäßen Sensor-Vorrichtung eingesetzter Laser kann auch aus mehreren Elementen gebildet werden. Ein derartiger Laser 37 enthält z. B. nach Fig. 9 ein entsprechend Fig. 3 ausgebildes, sog. Fabry-Pérot-Laserbauelement 38 mit einem aktiven Lasermaterial 39 und eine koaxial dazu angeordnete Faser 40, die beide längs einer Achse 41, entlang welcher auch die Laseremission erfolgt, hintereinander angeordnet sind. Das Laserbauelement 38 ist an einer Stirnseite mit einer hochreflektierenden, einen Resonatorspiegel 42 bildenden Vergütungsschicht (HR = high reflectivity) versehen, während eine gegenüberliegende Stirnseite eine Vergütungsschicht 43 mit niedriger Reflektivität (AR = antireflection) aufweist. Ein Resonator 44 des Lasers 37 wird hier einerseits durch den Resonatorspiegel 42 und andererseits durch einen Resonatorspiegel 45 in Form eines in der Faser 40 vorgesehenen Fasergitters gebildet. Die Lichtumläufe sind vereinfacht durch Pfeile e angedeutet. Ein Aufnahmeraum 46 für das Fluid befindet sich zwischen dem Laserbauelement 38 und einer entlang der Achse 41 folgenden Stirnfläche 47 der im wesentlichen aus einem Faserkern 48 gebildeten Faser 40. Von der Stirnfläche 47 bis zum gegenüberliegenden Ende ist der Faserkern 48 von einem Fasermantel 49 umgeben. Das vom Laser emittierte Licht a wird analog zu Fig. 1 einer nicht gezeigten Meßvorrichtung zugeführt.

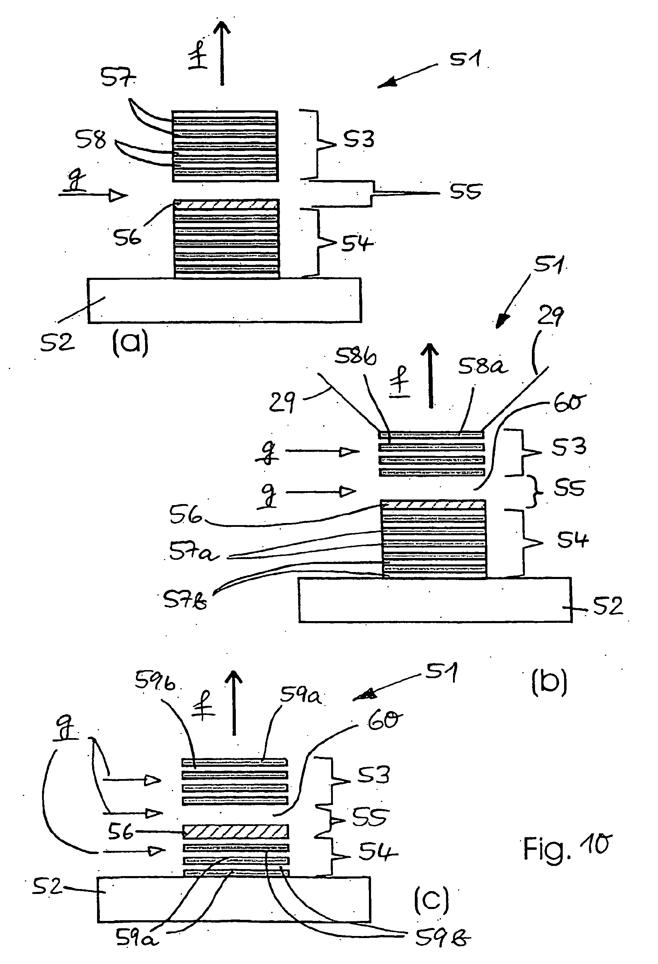

Fig. 10(a) bis 10(c) zeigen die wesentlichen Teile eines Lasers 51 mit einem vertikalen Resonator (VCSEL = vertical cavity surface emitting laser). Der Grundaufbau eines solchen Lasers 51, der das Licht nach oben (vertikal) in Richtung von Pfeilen f emittiert, ist bekannt [z. B. "Ultra low biased widely continuously tunable Fabry-Pérot Filter" von S. Irmer, J. Daleiden, V. Rangelov, C. Prott, F. Römer, M. Strassner, A. Tarraf, H. Hillmer in Phot. Technol. Lett. 15, 434 (2003)]. Der Laser 51 enthält eine Wärmesenke 52, auf der ein Bauelement montiert ist, das zwei Resonatorspiegel 53 und 54 in Form von DBR-Spiegeln (DBR = distributed Bragg reflector) und eine zwischen diesen angeordnete Kavität 55 aufweist, in der ein aktives Lasermedium 56 angeordnet ist. Die DBR- bzw. Resonatorspiegel 53, 54 sind als Schichtkörper mit Schichtenfolgen aufgebaut, von denen in Fig. 10(a) bis 10(c) drei Varianten beispielhaft dargestellt sind. Nach Fig. 10(a) enthalten beide Resonatorspiegel 53, 54 abwechselnd unterschiedliche Festkörperschichten 57 und 58 Beim Ausführungsbeispiel nach Fig. 10(b) enthält der Resonatorspiegel 54 die abwechselnd angeordneten Festkörperschichten 57a und 57b, während der Resonatorspiegel 53 abwechselnd Festkörperschichten 58a und Luftschichten 58b aufweist. Schließlich enthalten gemäß Fig. 10(c) beide Resonatorspiegel 53, 54 abwechselnd Festkörperschichten 59a und Luftschichten 59b. Die seitlich offenen Luftschichten 58b und 59b dienen dabei als Aufnahmeräume, die in Richtung von Pfeilen g vom nachzuweisenden Fluid durchströmt werden, das auch in einen verbleibenden Hohlraum 60 zwischen dem Lasermedium 56 und dem Resonatorspiegel 53 eintreten kann. Ein gasförmiges Fluid kann das Bauelement dabei allseitig um- und durchströmen. Im Fall einer Flüssigkeit werden vorzugsweise die anhand der Fig. 6 beschriebenen Leitelemente 29 verwendet [z. B. Fig. 10(b)], die den Flüssigkeitsstrom trichterartig auf die betreffenden Hohlräume richten.

Erfindungsgemäß kann der Laser 51 dadurch zur Bestimmung eines Fluids verwendet werden, daß dieses in Richtung der Pfeile g und quer zu den Pfeilen f entweder gemäß Fig. 10(a) nur durch den Hohlraum 60, gemäß Fig. 10(b) durch diesen und die Luftschichten 58b des Resonatorspiegels 53 oder gemäß Fig. 10(c) durch den Hohlraum 60 und die Luftschichten 58b, 59b beider Resonatorspiegel 53, 54 geleitet wird. Diese Teile der Kavität 55 bzw. die Luftschichten 58b, 59a und 59b ersetzen in diesem Fall die anhand der Fig. 1 und 6 bis 9 vorgesehenen Aufnahmeräume 14, 28, 30, 34 und 46. Dabei wird das Ausführungsbeispiel nach Fig. 10(c) derzeit als für die Zwecke der Erfindung am besten geeignet gehalten, weil das Fluid hier in zahlreiche Hohlräume des Lasers 51 eindringen kann, woraus eine hohe Empfindlichkeit resultiert.

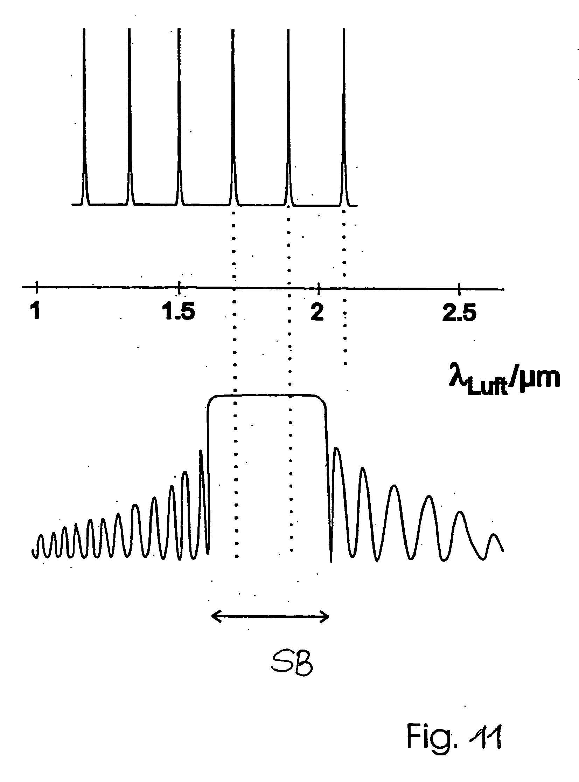

Der erfindungsgemäße Nachweis eines Fluids unter Benutzung des Lasers 51 nach Fig. 10 erfolgt z. B. entsprechend Fig. 11. Fig. 11 zeigt oben ein beispielhaftes Moden-Spektrum des aktiven Lasermediums 56 und unten das Retlektionsspektrum der Resonatorspiegel 53 und 54. Durch den hohen Brechungsindexkontrast der die Resonatorspiegel 53, 54 aufbauenden Einzelschichten 57, 58 und 59 ist ein Stopband SB spektral sehr ausgedehnt. Durch die Wahl der Länge der Kavität 55 in Richtung der Pfeile f in Fig. 10 werden die Lasermoden so festgelegt, daß genau zwei Moden in dem Bereich der höchsten Reflektivität, d. h. im Stopband SB zu liegen kommen, wie durch die gestrichelten Linien in Fig. 11 angedeutet ist. So wird wie bei den anderen Ausführungsbeispielen ein zweimodig emittierender Laser erhalten. Eine dieser beiden Moden wird erfindungsgemäß und analog zu Fig. 2 spektral auf eine Absorptionsbande bzw. -linie eines nachzuweisenden, den Laser 51 durchströmenden Fluids gebracht. Im übrigen wird so vorgegangen, wie anhand der Fig. 2 beschrieben wurde.

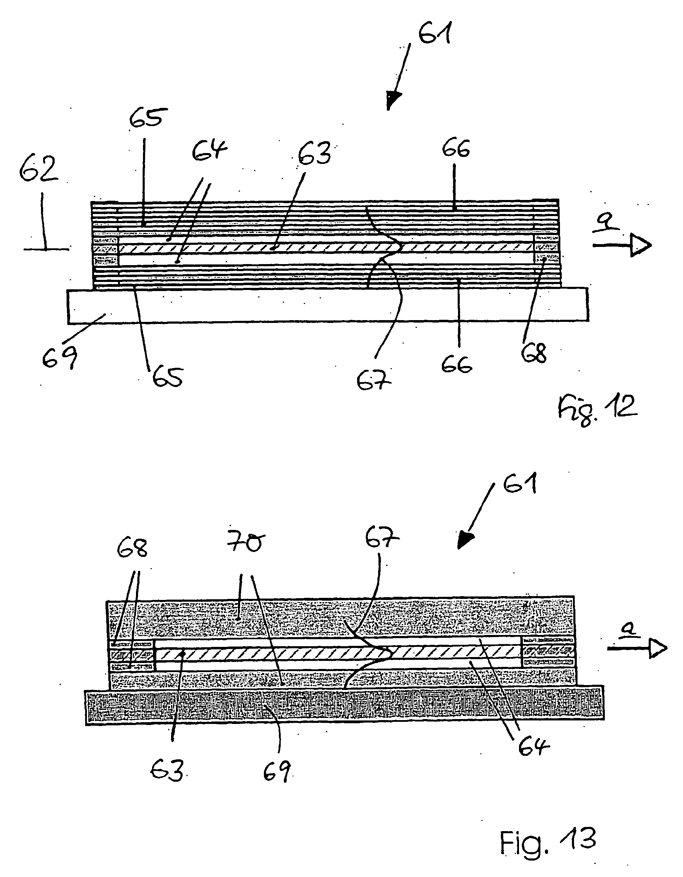

Beim Ausführungsbeispiel nach Fig. 12 weist ein Laser 61 analog zu Fig. 1 einen nicht näher dargestellten, horizontalen Resonator auf, von dem Licht längs einer Achse 62 in Richtung des Pfeils a emittiert wird. In der Achse 62 ist ein aktives Lasermedium 63 angeordnet. Beidseitig davon sind parallel zur Achse 62 angeordnete, als Aufnahmeräume 64 für ein Fluid dienende Hohlräume vorgesehen, an die sich zwei äußere Schichtenfolgen anschließen, die abwechselnd aus membranartigen Festkörperschichten 65 und Luftschichten 66 derart ausgebildet sind, daß sich in Richtung der Achse 62 ein schematisch angeordneter Intensitätsverlauf 67 für die Moden ergibt. Die Festkörperschichten 65 sind durch Haltekörper 68 beabstandet, die es ermöglichen, einerseits das zu untersuchende Gas durch den Aufnahmeraum 64 zu leiten, andererseits das gesamte Bauelement auf einen Substrat bzw. einer Wärmesenke 69 abzustützen.

Das Ausführungsbeispiel nach Fig. 13 unterscheidet sich vom Ausführungsbeispiel nach Fig. 12 nur dadurch, daß die eine Mehrzahl von Schichten 65, 66 enthaltenden Multimembranstrukturen durch zwei äußere Materialschichten 70 ersetzt sind, die einen geringeren Brechungsindex als das aktive Lasermedium 63 besitzen. Die Fixierung der teilweise frei schwebenden Membranen an der Wärmesenke 69 erfolgt mit nicht einzeln bezeichneten Halteblöcken.

Das Licht wird, wie der Intensitätsverlauf 67 zeigt, in beiden Ausführungsbeispielen horizontal geführt, wobei sich die Lichtmoden jeweils auch über den vom Fluid durchströmten Aufnahmeraum 64 erstrecken.

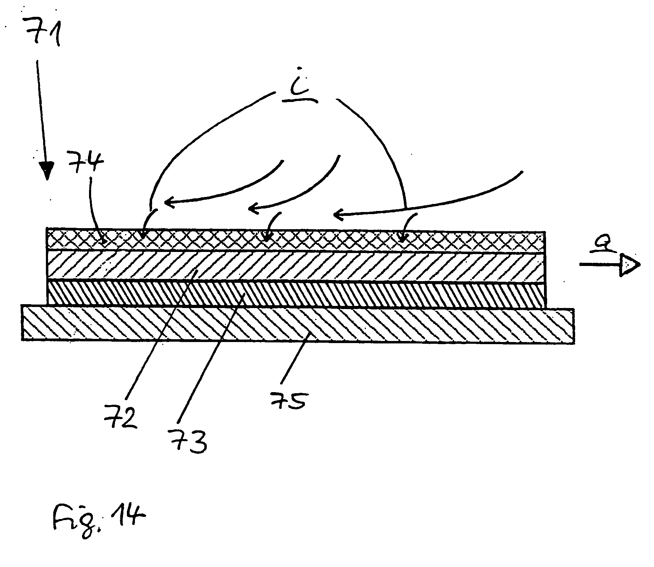

Bei einer in Fig. 14 gezeigten Variante werden die Moden eines Lasers 71 in einem horizontalen Wellenleiter-Resonator geführt. An eine Schicht aus einem aktiven Lasermedium 72 grenzen beidseitig zwei unterschiedliche Schichten 73 und 74 an, die beide einen geringeren Brechungsindex als das aktive Lasermedium 72 aufweisen. Die eine, innere Schicht 73 ist an einem Substrat 75 (bzw. einer Wärmesenke) montiert, während die andere, äußere Schicht 74 so ausgeführt ist, daß sie Bestandteile des nachzuweisenden Fluids aufnehmen kann, wie durch die Pfeile i angedeutet ist. Die Konzentration des Fluids in der äußeren Schicht 74, die hier den Aufnahmeraum für das Fluid bildet, ist dabei jedoch so gering, daß sich der Brechungsindex nicht ändert. Die Fluidbestandteile können z. B. eindiffundierende Teilchen oder Molekülagglomerate eines Gases sein. Das Fluid bzw. die in die Schicht 74 eingedrungenen Bestandteile davon beeinflussen analog zur obigen Beschreibung die in dem Wellenleiter-Resonator geführten Lasermoden. Anhand der daraus resultierenden Änderungen des Emissionsverhalten des Lasers 71 kann das Fluid nachgewiesen werden.

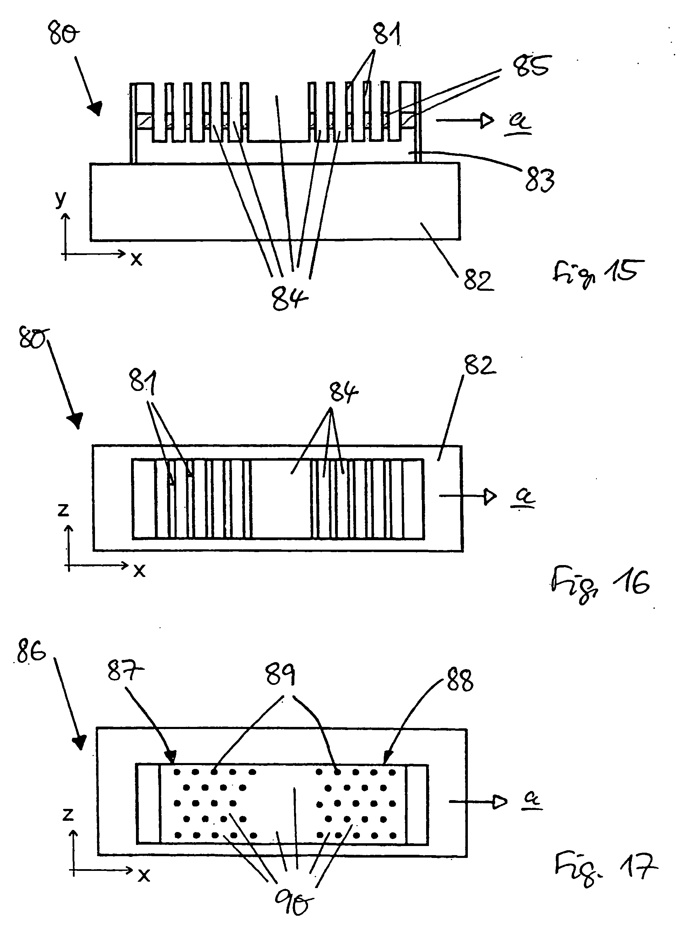

Gemäß eines weiteren, in Fig. 15 und 16 anhand eines Längsschnitts und einer Draufsicht gezeigten Ausführungsbeispiels ist der Resonator eines Lasers 80 als DBR-Reflektor mit einer üblichen Rippenstruktur ausgebildet, die eine Mehrzahl von Rippen 81 enthält, die von einem auf einer Wärmesenke 82 angeordneten Bauelement 83 senkrecht abstehen und in Richtung der Laseremission a durch Hohlräume 84 beabstandet sind. Jede Rippe 81 enthält einen Teil eines laseraktiven Mediums 85. Die Hohlräume 84 sind nach wenigstens einer Seite und/oder nach oben hin offen und bilden dadurch gleichzeitig einen Aufnahmeraum für ein Fluid.

Bei einem weiteren, in Fig. 17 gezeigten Ausführungsbeispiel der Erfindung enthält ein Laser 86 zwei Resonatorspiegel 87, 88 in Form von photonischen Kristallen, die jeweils eine Vielzahl von regelmäßig angeordneten Säulen 89 aufweisen. Jede Säule 89 enthält jeweils einen Teil eines nicht einzeln dargestellten, laseraktiven Mediums. Dabei sind die Säulen 89 in parallelen Reihen so angeordnet, daß das Laserlicht wie beim Ausführungsbeispiel nach Fig. 1 in Richtung des Pfeils a (x-Richtung) abgestrahlt wird. Ein nachzuweisendes Fluid wird in einen Aufnahmeraum geleitet, der durch zwischen den Säulen 89 frei bleibende Hohlräume 90 gebildet ist. Dabei zeigt Fig. 17 eine Draufsicht entsprechend Fig. 16, so daß ein Längsschnitt durch die Säulen 89 mit Fig. 15 korrespondiert.

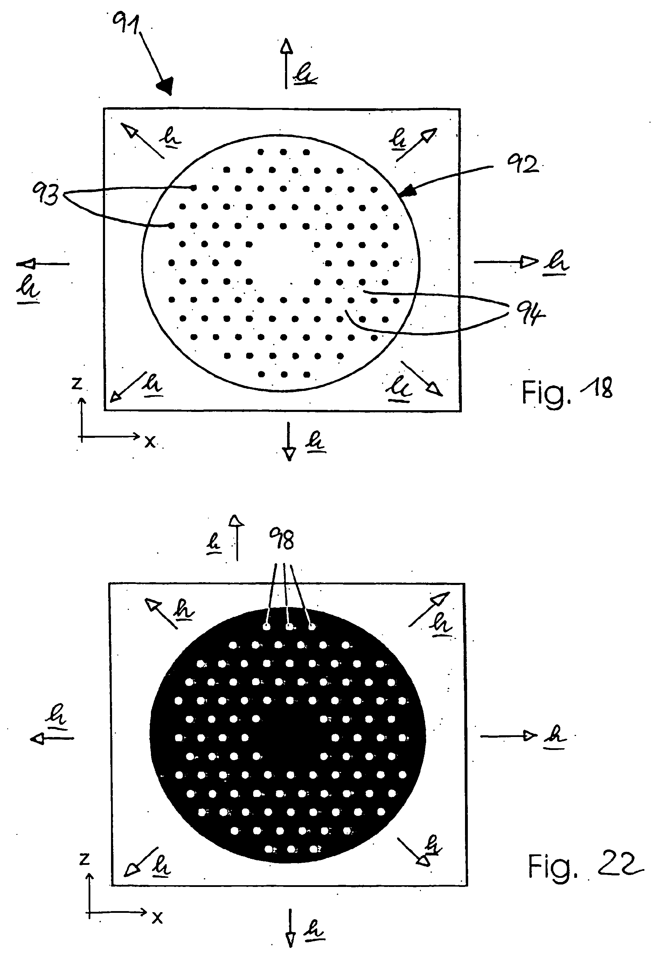

Das Ausführungsbeispiel eines Lasers 91 nach Fig. 18 unterscheidet sich von dem nach Fig. 17 dadurch, daß der Resonator des Lasers 91 durch einen photonischen Kristall 92 mit einer Vielzahl von Säulen 93 gebildet ist, die in Reihen angeordnet sind, die im wesentlichen radial von einem gemeinsamen Zentrum ausgehen. Die Abstrahlung des Laserlichts erfolgt daher hier radial in Richtung einer Vielzahl von Pfeilen h, die in einer wie üblich gedachten zx-Ebene liegen. Zwischen den Säulen 93 frei bleibende Hohlräume 94 bilden einen Aufnahmeraum für ein Fluid. Durch eine entsprechend modifiziert ausgeführte Ordnung des Gitters ist auch eine Emission senkrecht zur Bildebene möglich.

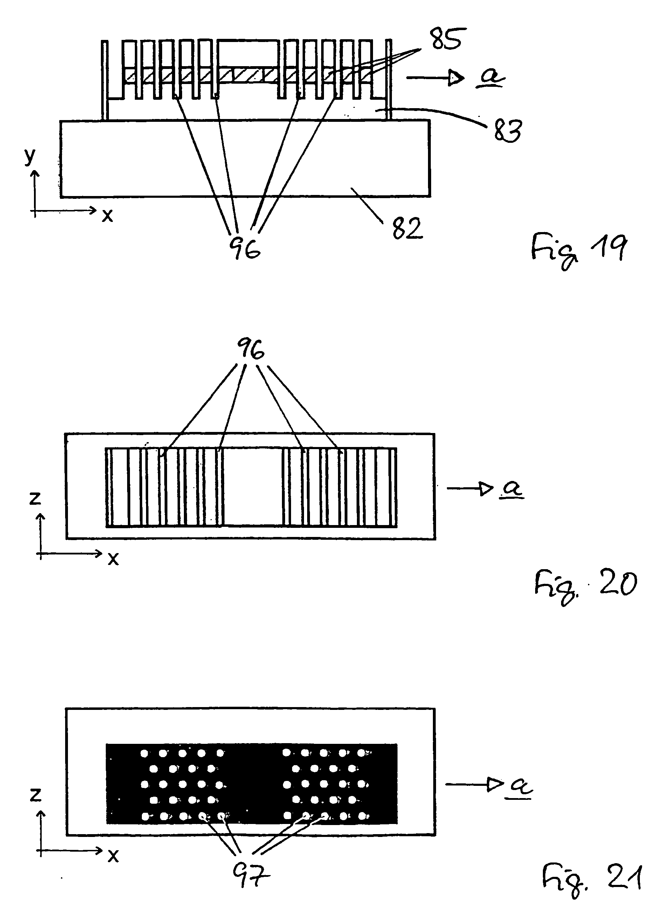

Während bei den Ausführungsbeispielen nach Fig. 15 bis 18 der aus den Hohlräumen 84, 90 bzw. 94 gebildete Aufnahmeraum für das Fluid jeweils vergleichsweise groß und der vom aktiven Lasermedium (z. B. 85) eingenommene Raum vergleichsweise klein ist, ist die Anordnung bei entsprechenden, in Fig. 19 bis 22 dargestellten Ausführungsbeispielen durch einen inversen Aufbau jeweils umgekehrt. Anstelle der Rippen bzw. Säulen 81 bzw. 89, 93 sind hier jeweils im Bauelement 83 bzw. in den photonischen Kristallen ausgebildete, röhrenförmige Löcher 96, 97 bzw. 98 als Fluid-Aufnahmeräume vorgesehen. Wie Fig. 19 und 20 zeigen, wird dadurch der Raum für das in die verbleibenden Zonen des Bauelements 83 einbringbare Lasermedium 85 vergrößert, während gleichzeitig der von den Löchern 96 eingenommene Raum für das Fluid entsprechend reduziert wird. Dasselbe gilt für die Ausführungsbeispiele nach Fig. 21 und 22. Im übrigen entsprechen die Ausführungsbeispiele nach Fig. 19 bis 22 denen nach Fig. 15 bis 18.

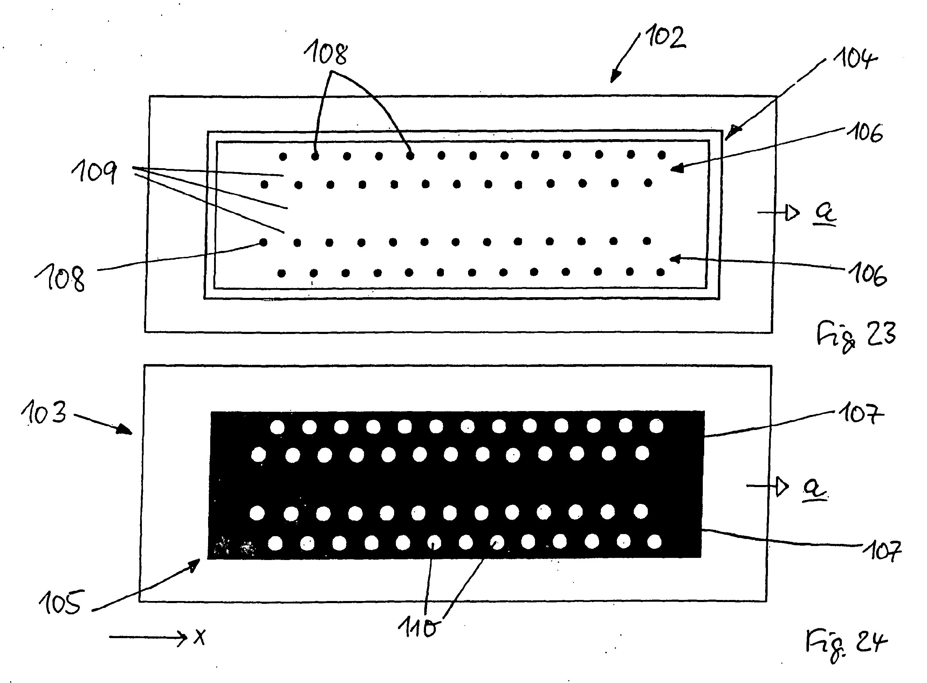

Fig. 23 und 24 zeigen schließlich je einen Laser 102 bzw. 103 mit photonischen Kristallen 104 und 105, in denen Defektreihen 106 bzw. 107 vorgesehen sind, die bei geeigneter Dimensionierung wellenleitende Eigenschaften aufweisen. Nach Fig. 23 sind die Defektreihen 106 aus Defektabschnitten 108 gebildet, welche die laseraktive Schicht enthalten. Zwischen den Defektabschnitten 108 bzw. den Defektreihen 106 ist ein Aufnahmeraum 109 für ein Fluid vorgesehen. Im Fall der Fig. 24 sind die Defektreihen 107 aus röhrenförmigen Löchern 110 im photonischen Kristall 105 gebildet, die einen Aufnahmeraum für ein Fluid bilden. Das aktive Lasermedium befindet sich hier in den Defektreihen 107 bzw. den die Löcher 110 umgebenden Materialschichten des photonischen Kristalls 105. Das Laserlicht wird parallel zu den Defektreihen 106, 107 abgestrahlt (Pfeil a), da die Anordnung so getroffen ist, daß horizontale Resonatoren vorliegen.

Die Erfindung ist nicht auf die beschriebenen und in den begleitenden Zeichnungen dargestellten Ausführungen beschränkt, die in vielfacher Art und Weise abgewandelt werden können. So sieht die Erfindung auch die Messung einer Volumenänderung durch Übersetzung in eine dieser entsprechende Längenänderung vor. Ebenso beinhaltet die Erfindung die Messung einer Wärmeenergie bzw. deren Änderung sowie eine Messung eines Wärmeenergieflusses bzw. dessen Änderungen. Dazu werden die Größen wie beschrieben jeweils über die Auswirkungen erfaßt, die sie bzw. ihre Änderungen auf die wenigstens zwei abgestrahlten Moden bzw. das Emissionsverhalten des Lasers haben. In entsprechender Weise können optische Brechzahlen von in den Lasern der erfindungsgemäßen Sensor-Vorrichtungen eingesetzten Komponenten oder deren Abhängigkeiten von der Temperatur, dem elektrischen und magnetischen Feld oder einer Strahlungsintensität od. dgl. erfaßt und über eine Bestimmung der Differenz der Intensitätsmaxima der von den Lasern ausgesandten Moden bestimmt werden. Auf diese Weise lassen sich hochsensitive Sensoren für Magnetfelder, elektrische Felder, Wärmeenergieänderung und elektromagnetische Strahlung konstruieren. Möglich wäre auch, die Sensor-Vorrichtungen so auszubilden, daß als physikalische Größen die Länge, der Druck und die Absorption durch ein Fluid in einer einzigen Vorrichtung einzeln oder in Kombination erfaßt werden können.

Weiterhin können anstelle der bei den horizontalen Resonatoren gezeigten Gitterstrukturen erster Ordnung, welche eine horizontale Lichtemission bewirken (Pfeil a), auch Gitter höherer Ordnung (z. B. zweiter Ordnung) verwendet werden. Dadurch wird das Licht vertikal, d. h. in y-Richtung abgestrahlt (z. B. Pfeil f in Fig. 10). Dies ist insbesondere dann sehr vorteilhaft, wenn der Nachweis eines Fluids über eine optische Messung und Auswertung erfolgt.

Als Laser kommen für die Zwecke der vorliegenden Erfindung insbesondere Halbleiterlaser wie Heterostruktur-Diodenlaser aus III-V-Halbleitern, Quantum Well-Laser, II-VI-Diodenlaser, Festkörperlaser wie z. B. Nd:YAG-Laser oder Faserlaser in Betracht. Besonders bevorzugt sind Laser, die einen miniaturisierten Aufbau der erfindungsgemäßen Sensor-Vorrichtung ermöglichen.

Schließlich versteht sich, daß die verschiedenen Merkmale auch in anderen als den Zeichnungen dargestellten und beschriebenen Kombinationen angewendet werden können.

## Patentansprüche

1. Sensor-Vorrichtung zur Ermittlung einer physikalischen Größe mit einem Laser (1, 25, 37, 51, 61, 71, 80, 86, 91, 102, 103), dessen Emissionsverhalten durch die physikalische Größe beeinflussbar ist, wobei der Laser (1, 25, 37, 51, 61, 71, 80, 86, 91, 102, 103) zur Emission von wenigstens zwei konkurrierenden und oberhalb der Laserschwelle liegenden Moden (E1, E2, E1', E2', E3, E4) eingerichtet ist und die Sensor-Vorrichtung zur Ermittlung der physikalischen Größe durch einen Vergleich der sich unter dem Einfluss der physikalischen Größe ergebenden Änderungen der Intensitäten der wenigstens zwei Moden (E1, E2, E1', E2', E3, E4) ausgelegt ist, **dadurch gekennzeichnet, daß** die Sensor-Vorrichtung zur Bestimmung der Intensitäten der wenigstens zwei Moden (E1, E2, E1', E2', E3, E4) eine Messeinrichtung zur Aufnahme des relativen Intensitätsrauschens (RIN) des Lasers (1, 25, 37, 51, 61, 71, 80, 86, 91, 102, 103) aufweist.

2. Sensor-Vorrichtung nach Anspruch 1, **dadurch gekennzeichnet, daß** sie ein optisches Detektionssystem (6 bis 10) zur Messung einer spektralen Intensitätsverteilung der vom Laser (1, 25, 37, 51, 61, 71, 80, 86, 91, 102, 103) emittierten Strahlung aufweist.

3. Sensor-Vorrichtung nach Anspruch 1 oder 2, **dadurch gekennzeichnet, daß** der Laser (1, 25, 37, 51, 61, 71, 80, 86, 91, 102, 103) ein Festkörperlaser ist.

4. Sensor-Vorrichtung nach einem der Ansprüche 1 bis 3, **dadurch gekennzeichnet, daß** sie zur Ermittlung der optischen Absorption durch eine chemische, wenigstens eine optische Absorptionsbande (A) aufweisende Substanz als physikalischer Größe ausgebildet ist.

5. Sensor-Vorrichtung nach Anspruch 4, **dadurch gekennzeichnet, daß** sie einen innerhalb eines Resonators des Lasers (1, 25, 37, 51, 61, 71, 80, 86, 91, 102, 103) vorgesehenen Aufnahmeraum (14, 28, 30, 34, 46, 55, 58b, 60, 64, 74, 84, 90, 94, 96 bis 98, 109, 110) für ein Fluid aufweist.

6. Sensor-Vorrichtung nach einem der Ansprüche 1 bis 5, **dadurch gekennzeichnet, daß** sie einen Laser (1, 25, 37, 61, 71, 80, 86, 91,102, 103) mit einem horizontalen Resonator enthält.

7. Sensor-Vorrichtung nach Anspruch 6, **dadurch gekennzeichnet, daß** der Aufnahmeraum (14, 28. 30, 34, 84, 90, 94) als wenigstens eine Unterbrechung in einem aktiven Lasermaterial (4, 85) ausgebildet ist.

8. Sensor-Vorrichtung nach Anspruch 6, **dadurch gekennzeichnet, daß** der Resonator als photonische Kristalle ausgebildete Resonatorspiegel (87, 88, 92, 104) enthält

9. Sensor-Vorrichtung nach Anspruch 8, **dadurch gekennzeichnet, daß** der Aufnahmeraum (90, 94) zwischen Säulen (89, 93) der photonischen Kristalle (87, 88, 92) frei bleibende Hohlräume enthält.

10. Sensor-Vorrichtung nach Anspruch 8, **dadurch gekennzeichnet, daß** die photonischen Kristalle röhrenförmige, den Aufnahmeraum bildende Löcher (97, 98) enthalten.

11. Sensor-Vorrichtung nach einem der Ansprüche 1 bis 5, **dadurch gekennzeichnet, daß** sie einen Laser (51) mit einem vertikalen Resonator enthält.

12. Sensor-Vorrichtung nach Anspruch 11, **dadurch gekennzeichnet, daß** der Aufnahmeraum wenigstens einen Hohlraum (60) enthält, der zwischen zwei durch DBRSpiegel gebildeten Resonatorspiegeln (53, 54) angeordnet ist.

13. Sensor-Vorrichtung nach Anspruch 11 oder 12, **dadurch gekennzeichnet, daß** wenigstens ein Resonatorspiegel (53) eine Schichtenfolge aus wenigstens einer Festkörperschicht (58a, 59a) und wenigstens einer einen Aufnahmeraum für ein Fluid bildenden Luftschicht (58b, 59b) enthält.

14. Sensor-Vorrichtung nach einem der Ansprüche 4 bis 13, **dadurch gekennzeichnet, daß** sie zur Ermittlung der Absorption durch mehrere chemische Substanzen eingerichtet ist, indem sie einen Laser (1, 25, 37, 51, 61, 71, 80, 86, 91, 102, 103) enthält der zur Ausstrahlung einer entsprechenden Mehrzahl von Moden (E1, E2, E1', E2', E3, E4) ausgebildet ist, von denen jeweils eine Mode auf eine Absorptionsbande (A) einer der Substanzen abstimmbar ist.

15. Sensor-Vorrichtung nach einem der Ansprüche 4 bis 13, **dadurch gekennzeichnet, daß** sie zur Ermittlung der Absorption durch eine Mehrzahl (k-1) von chemischen Substanzen eingerichtet ist, indem sie einen Laser (1, 25, 37, 51, 61, 71, 80, 86, 91, 102, 103) enthält, der zur Ausstrahlung einer Anzahl (k) von Moden (E1, E2, E1', E2', E3, E4) eingerichtet ist, die um wenigstens eins grösser als die Mehrzahl (k-1) der Substanzen ist, wobei außer einer als Referenzmode dienende Mode alle übrigen (k-1) Moden gleichzeitig auf je eine Absorptionsbande (A) einer der Substanzen abstimmbar sind.

16. Verfahren zur Ermittlung einer physikalischen Größe unter Benutzung eines Lasers (1, 25, 37, 51, 61, 71, 80, 86, 91, 102, 103) durch Beeinflussung von dessen Emissionsverhalten mittels der physikalischen Größe, wobei der Laser (1, 25, 37, 51, 61, 71, 80, 86, 91, 102, 103) so betrieben wird, daß er wenigstens zwei konkurrierende, oberhalb der Laserschwelle liegende Moden (E1, E2, E1', E2', E3, E4) emittiert, und wobei die physikalische Größe durch Vergleichen derjenigen Änderungen ermittelt wird, die sich in den Intensitäten der wenigstens zwei Moden (E1, E2, E1', E2', E3, E4) unter dem Einfluss der physikalischen Größe ergeben, **dadurch gekennzeichnet, daß** die Intensitäten der wenigstens zwei Moden (E1, E2, E1', E2', E3, E4) durch eine Messung des relativen Intensitätsrauschens (RIN) des Lasers (1, 25, 37, 51, 61, 71, 80, 86, 91, 102, 103) ermittelt werden.

17. Verfahren nach Anspruch 16, **dadurch gekennzeichnet, daß** als Moden (E1, E2, E1', E2', E3, E4) longitudinale und/oder transversale elektrische und/oder magnetische Moden benutzt werden.

18. Verfahren nach Anspruch 16 oder 17, **dadurch gekennzeichnet, daß** der Laser (1, 25, 37, 51, 61, 71, 80, 86, 91, 102, 103) mit wenigstens zwei Moden (E1, E2, E1', E2', E3, E4) betrieben wird, die unterschiedliche Polarisationen besitzen.

19. Verfahren nach einem der Ansprüche 16 bis 18, **dadurch gekennzeichnet, daß** zur quantitativen Ermittlung der physikalischen Größe Eichmessungen vorgenommen werden.

20. Verfahren nach einem der Ansprüche 16 bis 19, **dadurch gekennzeichnet, daß** als physikalische Größe eine optische Absorption (A) durch eine chemische Substanz ermittelt wird.

21. Verfahren nach einem der Ansprüche 16 bis 19, **dadurch gekennzeichnet, daß** als physikalische Größe eine Länge, ein Druck, ein magnetisches oder elektrisches Feld, eine elektromagnetische Strahlungsenergie, eine Temperatur, eine Wärmeenergie, eine Strahlungsleistung oder eine daraus abgeleitete Größe ermittelt wird.

22. Verfahren nach Anspruch 20, **dadurch gekennzeichnet, daß** der Laser (1, 25, 37, 51, 61, 71, 80, 86, 91, 102, 103) so betrieben wird, daß er eine Mehrzahl von (k) Moden (E1, E2, E1', E2', E3, E4) ausstrahlt, und so durchgestimmt wird, daß die Mehrzahl (k) der Moden (E1, E2, E1', E2', E3, E4) bis auf wenigstens eine Mode mit je einer Absorptionsbande (A) einer um eins kleineren Mehrzahl (k-1) von chemischen Substanzen spektral übereinstimmt und daß wenigstens eine Mode, die keiner der Substanzen zugeordnet ist, als Referenzmode verwendet wird.

23. Verfahren nach Anspruch 20, **dadurch gekennzeichnet, daß** der Laser (1, 25, 37, 51, 61, 71, 80, 86, 91, 102, 103) so betrieben wird, daß er zur Ermittlung der durch unterschiedliche Substanzen herbeiführbaren Absorption eine Mehrzahl (k) von Moden (E1, E2, E1', E2'. E3, E4) ausstrahlen und so durchgestimmt werden kann, daß jeweils eine der Moden mit einer Absorptionsbande (A) einer der Substanzen spektral übereinstimmt.

## Claims

1. A sensor device for determining a physical value, with a laser (1, 25, 37, 51, 61, 71, 80, 86, 91, 102, 103) whose emission behaviour can be affected by the physical value, wherein the laser(1, 25, 37, 51, 61, 71, 80, 86, 91, 102, 103) is arranged to emit at least two concurrent modes (E1, E2, E1', E2', E3, E4) lying above the laser threshold, and wherein the determination of the physical value is effected by a comparison between changes of the intensities of the at least two modes (E1, E2, E1', E2', E3, E4) occurring under the influence of the physical value, **characterized in that** the sensor device comprises a measuring device for receiving the relative intensity noise (RIN) of the laser (1, 25, 37, 51, 61, 71, 80, 86, 91, 102, 103) for the determination of the intensities of the at least two modes (E1, E2, E1', E2', E3, E4).

2. A sensor device according to claim 1, **characterized in that** it comprises an optical detection system (6 to 10) for measuring a spectral intensity distribution of the radiation emitted from the laser (1, 25, 37, 51, 61, 71, 80, 86, 91, 102, 103).

3. A sensor device according to claim 1 or 2, **characterized in that** the laser (1, 25, 37, 51, 61, 71, 80, 86, 91, 102, 103) is a solid body laser.

4. A sensor device according to one of claims 1 to 3, **characterized in that** it is arranged to determine the optical absorption through a chemical substance having at least one optical absorption band (A) as a physical value.

5. A sensor device according to claim 4, **characterized in that** it comprises a receiving space (14, 28, 30, 34, 46, 55, 58b, 60, 64, 74, 84, 90, 94, 96 to 98, 109, 110) for a fluid within a resonator of the laser (1, 25, 37, 51, 61, 71, 80, 86, 91, 102, 103).

6. A sensor device according to one of claims 1 to 5, **characterized in that** it includes a laser (1, 25, 37, 61, 71, 80, 86, 91, 102, 103) with a horizontal resonator.

7. A sensor device according to claim 6, **characterized in that** the receiving space (14, 28, 30, 34, 84, 90, 94) is formed as at least one interruption in an active laser material (4, 85).

8. A sensor device according to claim 6, **characterized in that** the resonator includes a resonator mirrors (87, 88, 92, 104) formed as photonic crystals.

9. A sensor device according to claim 8, **characterized in that** the receiving space (90, 94) includes hollow spaces remaining free between columns (89, 93) of the photonic crystals (87, 88, 92).

10. A sensor device according to claim 8, **characterized in that** the photonic crystals contain tubular holes (97, 98) forming the receiving space.

11. A sensor device according to one of claims 1 to 5, **characterized in that** it includes a laser (51) with a vertical resonator.

12. A sensor device according to claim 11, **characterized in that** the receiving space includes at least one hollow space (60) which is disposed between two resonator mirrors (53, 54) formed by DBR mirrors.

13. A sensor device according to claim 11 or 12, **characterized in that** at least one resonator mirror (53) includes a layer sequence of at least one solid body layer (58a, 59a) and at least one air layer (58b, 59b) forming a receiving space for a fluid.

14. A sensor device according to one of claims 4 to 13, **characterized in that** it is arranged to determine the absorption by a plurality of chemical substances, **in that** it includes a laser (1, 25, 37, 51, 61, 71, 80, 86, 91, 102, 103) which is formed to emit a corresponding number of modes (E1, E2, E1', E2', E3, E4), of which each mode can be tuned to an absorption band (A) of one of the substances.

15. A sensor device according to one of claims 4 to 13, **characterized in that** it is arranged to determine the absorption of a plurality (k-1) of chemical substances, **in that** it includes a laser (1, 25, 37, 51, 61, 71, 80, 86, 91, 102, 103) which is arranged to emit a number (k) of modes (E1, E2, E1', E2', E3, E4) which is at least one greater than the plurality (k-1) of the substances, wherein all other modes (k-1) apart from a mode serving as a reference mode can be tuned simultaneously to an absorption band (A) of one each of the substances.

16. A method of determining a physical value using a laser (1, 25, 37, 51, 61, 71, 80, 86, 91, 102, 103) by affecting its emission behaviour by means of the physical value, wherein the laser (1, 25, 37, 51, 61, 71, 80, 86, 91, 102, 103) is so operated that it emits at least two concurrent modes (E1, E2, E1', E2', E3, E4) lying above the laser threshold, and wherein the physical value is determined by comparison of those changes which result in relation to the intensities of the at least two modes (E1, E2, E1', E2', E3, E4) under the influence of the physical value, **characterized in that** the intensities of the at least two modes (E1, E2, E1', E2', E3, E4) are determined by measuring the relative intensity noise (RIN) of the laser (1, 25, 37, 51, 61, 71, 80, 86, 91, 102, 103).

17. A method according to claim 16, **characterized in that** longitudinal and/or transverse electrical and/or magnetic modes are employed as modes (E1, E2, E1', E2', E3, E4).

18. A method according to claim 16 or 17, **characterized in that** the laser (1, 25, 37, 51, 61, 71, 80, 86, 91, 102, 103) is operated with at least two modes (E1, E2, E1', E2', E3, E4) which have different polarisations.

19. A method according to one of claims 16 to 18, **characterized in that** calibration measurements are effected for quantitative determination of the physical value.

20. A method according to one of claims 16 to 19, **characterized in that** an optical absorption (A) by a chemical substance is determined as a physical value.

21. A method according to one of claims 16 to 19, **characterized in that** a length, a pressure, a magnetic or electric field, an electromagnetic radiation energy, a temperature, a heat energy, a radiation power or a value derived therefrom is determined as a physical value.

22. A method according to claim 20, **characterized in that** the laser (1, 25, 37, 51, 61, 71, 80, 86, 91, 102, 103) is so operated that it radiates a plurality (k) of modes (E1, E2, E1', E2', E3, E4) and is so tuned that the plurality (k) of the modes (E1, E2, E1', E2', E3, E4) apart from one mode each matches spectrally an absorption band (A) of a smaller plurality (k-1) of chemical substances and **in that** at least one mode which is associated with none of the substances is used as a reference mode.

23. A method according to claim 20, **characterized in that** the laser (1, 25, 37, 51, 61, 71, 80, 86, 91, 102, 103) is so operated that a plurality (k) of modes (E1, E2, E1', E2', E3, E4) can be radiated and so tuned for determining the absorption which can be affected by different substances that each one of the modes spectrally matches an absorption band (A) of one of the substances.

## Revendications

1. Dispositif de détection servant à déterminer une grandeur physique, avec un laser (1, 25, 37, 51, 61, 71, 80, 86, 91, 102, 103), dont le comportement d'émission peut être influencé par la grandeur physique, sachant que le laser (1, 25, 37, 51, 61, 71, 80, 86, 91, 102, 103) est installé pour l'émission d'au moins deux modes (E1, E2, E1', E2', E3, E4) concurrents et se trouvant au-dessus du seuil de l'effet laser et que le dispositif de détection est configuré pour déterminer la grandeur physique par une comparaison des variations des intensités des dits au moins deux modes ou plus (E1, E2, E1', E2', E3, E4) résultant de l'influence de la grandeur physique,
**caractérisé en ce que** le dispositif de détection servant à définir les intensités des dits au moins deux modes (E1, E2, E1', E2', E3, E4) présente un équipement de mesure servant à enregistrer le bruit d'intensité relatif (RIN) du laser (1, 25, 37, 51, 61, 71, 80, 86, 91, 102, 103).

2. Dispositif de détection selon la revendication 1, **caractérisé en ce qu'**il présente un système de détection (6 à 10) optique servant à mesurer une distribution d'intensité spectrale du rayonnement émis par le laser (1, 25, 37, 51, 61, 71, 80, 86, 91, 102, 103).

3. Dispositif de détection selon la revendication 1 ou 2, **caractérisé en ce que** le laser (1, 25, 37, 51, 61, 71, 80, 86, 91, 102, 103) est un laser à solide.

4. Dispositif de détection selon l'une quelconque des revendications 1 à 3, **caractérisé en ce que** ledit dispositif de détection est réalisé pour déterminer en tant que grandeur physique l'absorption optique par une substance chimique présentant au moins une bande d'absorption (A) optique.

5. Dispositif de détection selon la revendication 4, **caractérisé en ce qu'**il présente un espace de réception (14, 28, 30, 34, 46, 55, 58b, 60, 64, 74, 84, 90, 94, 96 à 98, 109, 110) pour un fluide prévu à l'intérieur d'un résonateur du laser (1, 25, 37, 51, 61, 71, 80, 86, 91, 102, 103).

6. Dispositif de détection selon l'une quelconque des revendications 1 à 5, **caractérisé en ce qu'**il contient un laser (1, 25, 37, 61, 71, 80, 86, 91, 102, 103) doté d'un résonateur horizontal.

7. Dispositif de détection selon la revendication 6, **caractérisé en ce que** l'espace de réception (14, 28, 30, 34, 84, 90, 94) est réalisé comme au moins une discontinuité dans un matériau laser actif (4, 85).

8. Dispositif de détection selon la revendication 6, **caractérisé en ce que** le résonateur contient des miroirs résonateurs (87, 88, 92, 104) réalisés comme des cristaux photoniques.

9. Dispositif de détection selon la revendication 8, **caractérisé en ce que** l'espace de réception (90, 94) contient des cavités restant libres entre des colonnes (89, 93) des cristaux photoniques (87, 88, 92).

10. Dispositif de détection selon la revendication 8, **caractérisé en ce que** les cristaux photoniques contiennent des trous (97, 98) tubulaires formant l'espace de réception.

11. Dispositif de détection selon l'une quelconque des revendications 1 à 5, **caractérisé en ce que** ledit dispositif de détection contient un laser (51) doté d'un résonateur vertical.

12. Dispositif de détection selon la revendication 11, **caractérisé en ce que** l'espace de réception contient au moins une cavité (60), qui est disposée entre deux miroirs résonateurs (53, 54) formés par des miroirs de Bragg dits miroirs DBR.

13. Dispositif de détection selon la revendication 11 ou 12, **caractérisé en ce qu'**au moins un miroir résonateur (53) contient une succession de couches formée à partir d'au moins une couche de corps solide (58a, 59a) et à partir d'au moins une couche d'air (58b, 59b) formant un espace de réception pour un fluide.

14. Dispositif de détection selon l'une quelconque des revendications 4 à 13, **caractérisé en ce qu'**il est installé pour déterminer l'absorption par plusieurs substances chimiques, **en ce qu'**il contient un laser (1, 25, 37, 51, 61, 71, 80, 86, 91, 102, 103), qui est réalisé pour l'émission d'une pluralité correspondante de modes (E1, E2, E1', E2', E3, E4), parmi lesquels respectivement un mode peut être accordé à une bande d'absorption (A) d'une des substances.

15. Dispositif de détection selon l'une quelconque des revendications 4 à 13, **caractérisé en ce qu'**il est installé pour déterminer l'absorption par une pluralité (k-1) de substances chimiques, **en ce qu'**il contient un laser (1, 25, 37, 51, 61, 71, 80, 86, 91, 102, 103),qui est installé pour émettre un nombre (k) de modes (E1, E2, E1', E2', E3, E4) qui est supérieur d'au moins une valeur de 1 à la pluralité (k-1) de substances, sachant qu'à l'exception d'un mode faisant office de mode de référence, tous les autres modes (k-1) sont simultanément accordés à respectivement une bande d'absorption (A) d'une des substances.

16. Procédé servant à déterminer une grandeur physique moyennant l'utilisation d'un laser (1, 25, 37, 51, 61, 71, 80, 86, 91, 102, 103) en influençant le comportement d'émission de ce dernier au moyen de la grandeur physique, sachant que le laser (1, 25, 37, 51, 61, 71, 80, 86, 91, 102, 103) fonctionne de telle manière qu'il émet au moins deux modes (E1, E2, E1', E2', E3, E4) concurrents se trouvant au-dessus du seuil de l'effet laser et sachant que la grandeur physique est déterminée en comparant les variations respectives dans les intensités desdits au moins deux modes (E1, E2, E1', E2', E3, E4) qui résultent de l'influence de la grandeur physique, **caractérisé en ce que** les intensités desdits au moins deux modes (E1, E2, E1', E2', E3, E4) sont déterminées par une mesure du bruit d'intensité relatif (RIN) du laser (1, 25, 37, 51, 61, 71, 80, 86, 91, 102, 103).

17. Procédé selon la revendication 16, **caractérisé en ce qu'**on utilise comme modes (E1, E2, E1', E2', E3, E4) des modes magnétiques et/ou électriques transversaux et/ou longitudinaux.

18. Procédé selon la revendication 16 ou 17, **caractérisé en ce que** le laser (1, 25, 37, 51, 61, 71, 80, 86, 91, 102, 103) fonctionne avec au moins deux modes (E1, E2, E1', E2', E3, E4), qui présentent différentes polarisations.

19. Procédé selon l'une quelconque des revendications 16 à 18, **caractérisé en ce que** des mesures d'étalonnage sont effectuées pour déterminer de manière quantitative la grande physique.

20. Procédé selon l'une quelconque des revendications 16 à 19, **caractérisé en ce qu'**une absorption (A) optique est déterminée en tant que grandeur physique par une substance chimique.

21. Procédé selon l'une quelconque des revendications 16 à 19, **caractérisé en ce qu'**on détermine comme grandeur physique une longueur, une pression, un champ magnétique ou électrique, une énergie de rayonnement électromagnétique, une température, une énergie thermique, une puissance rayonnée ou une grandeur en résultant.

22. Procédé selon la revendication 20, **caractérisé en ce que** le laser (1, 25, 37, 51, 61, 71, 80, 86, 91, 102, 103) fonctionne de telle manière qu'il émet une pluralité de (k) modes (E1, E2, E1', E2', E3, E4), et **en ce qu'**il est ajusté de telle manière que la pluralité (k) de modes (E1, E2, E1', E2', E3, E4) à l'exception d'au moins un mode coïncide de manière spectrale avec respectivement une bande d'absorption (A) d'une pluralité (k-1) de substances chimiques plus petite d'une valeur de 1 et qu'on utilise en tant que mode de référence au moins un mode qui est associé à aucune substance.

23. Procédé selon la revendication 20, **caractérisé en ce que** le laser (1, 25, 37, 51, 61, 71, 80, 86, 91, 102, 103) fonctionne de telle manière qu'il peut émettre une pluralité (k) de modes (E1, E2, E1', E2', E3, E4) pour déterminer l'absorption pouvant être causée par diverses substances et qu'il peut être ajusté de telle manière que respectivement un des modes coïncide de manière spectrale avec une bande d'absorption (A) d'une des substances.
